(19) Europäisches Patentamt
European Patent Office
Office européen des brevets

(11) **EP 4 302 994 A1**

(12) **EUROPEAN PATENT APPLICATION**
published in accordance with Art. 153(4) EPC

(43) Date of publication:
**10.01.2024 Bulletin 2024/02**

(21) Application number: **21929167.1**

(22) Date of filing: **28.10.2021**

(51) International Patent Classification (IPC):
**B32B 27/00** (2006.01) **B32B 27/32** (2006.01)
**B32B 27/36** (2006.01) **B32B 27/40** (2006.01)
**C09K 3/00** (2006.01)

(52) Cooperative Patent Classification (CPC):
**B32B 27/00; B32B 27/32; B32B 27/36;
B32B 27/40; C09K 3/00**

(86) International application number:
**PCT/JP2021/039796**

(87) International publication number:
**WO 2022/185606 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2021 JP 2021033683**

(71) Applicant: **TOYOBO CO., LTD.
Osaka-shi, Osaka 530-0001 (JP)**

(72) Inventors:
• **TOKUDA,Kaya
Otsu-shi, Shiga 520-0292 (JP)**

• **OKUYAMA,Tetsuo
Otsu-shi, Shiga 520-0292 (JP)**
• **MAEDA,Satoshi
Otsu-shi, Shiga 520-0292 (JP)**
• **WATANABE,Naoki
Otsu-shi, Shiga 520-0292 (JP)**
• **AKASHI,Mayumi
Otsu-shi, Shiga 520-0292 (JP)**

(74) Representative: **Vossius & Partner
Patentanwälte Rechtsanwälte mbB
Siebertstraße 3
81675 München (DE)**

(54) **LAMINATED FILM, LAMINATED FILM MANUFACTURING METHOD, LAMINATE, AND LAMINATE MANUFACTURING METHOD**

(57)     Provided is a laminated film that includes a heat-resistant polymer film and a first protective film laminated on one of the surfaces of the heat-resistant polymer film, wherein: the first protective film has a first substrate and a first adhesive layer provided on the first substrate; the first substrate, the first adhesive layer, and the heat-resistant polymer film are laminated in this order; the first substrate is a polyester film or a polyolefin film; the first adhesive layer contains a urethane-based resin; and the maximum diameter of a gelled product in the first adhesive layer is equal to or less than 14 pm.

Fig.3

**Description**

TECHNICAL FIELD

The present invention relates to a laminated film, a laminated film manufacturing method, a laminate, and a laminate manufacturing method.

BACKGROUND ART

In recent years, for the purpose of decreasing the weight, size, and thickness of and imparting flexibility to functional elements such as semiconductor elements, MEMS elements, and display elements, technological development for forming these elements on polymer films has been actively carried out. In other words, as materials for substrates of electronic parts such as information and communication equipment (broadcasting equipment, mobile radio, portable communication equipment, and the like), radar, and high-speed information processing equipment, ceramics which exhibit heat resistance and can cope with increases in frequencies (reaching the GHz band) of the signal band of information and communication equipment have been conventionally used. However, ceramics are not flexible and are also hardly thinned and thus have a drawback that the applicable fields are limited, and polymer films have recently been used as substrates.

When functional elements such as semiconductor elements, MEMS elements, and display elements are formed on the surface of polymer films, it is ideal to perform processing by a so-called roll-to-roll process which utilizes the flexibility that is a property of polymer films. However, in industries such as semiconductor industry, MEMS industry, and display industry, process technologies for rigid flat substrates such as wafer bases or glass substrate bases have been so far constructed. Hence, in order to form functional elements on polymer films utilizing the existing infrastructure, a process is used in which the polymer films are bonded to rigid supports (inorganic substrates such as glass plates, ceramic plates, silicon wafers, and metal plates), desired elements are formed on the laminates, and then the polymer films and desired elements are peeled off from the supports.

However, in the process of forming a desired functional element on a laminate in which a polymer film and an inorganic substrate are bonded together, the laminate is often exposed to a high temperature. For example, in the formation of functional elements such as polysilicon and oxide semiconductors, a step performed in a temperature region of about 200°C to 600°C is required. In addition, a temperature of about 200 to 300°C may be applied to the film when a hydrogenated amorphous silicon thin film is fabricated, and heating at about 450°C to 600°C may be required in order to heat and dehydrogenate amorphous silicon and obtain low-temperature polysilicon. Hence, the polymer film composing the laminate is required to exhibit heat resistance, but as a practical matter, polymer films which can withstand practical use in such a high temperature region are limited.

Both surfaces or one surface of the polymer film used in the above applications is covered with a protective film until immediately before being used in order to prevent dust and the like from entering between the support and the polymer film when the polymer film is bonded to the support (see, for example, Patent Document 1).

PRIOR ART DOCUMENTS

PATENT DOCUMENTS

Patent Document 1: WO 2016/031746

SUMMARY OF THE INVENTION

PROBLEMS TO BE SOLVED BY THE INVENTION

The polymer film described above is wound into a roll shape in a state where a protective film is pasted to both surfaces thereof, and supplied in the form of a roll. As the protective film described above, a protective film including a base material and a pressure sensitive adhesive layer provided on the base material is used.

When a polymer film of which both surfaces are protected with a protective film is bonded to an inorganic substrate, lamination is carried out by peeling off only the protective film on the side to be bonded to the inorganic substrate from the viewpoint of preventing scratches on the polymer film surface. Therefore, the pressure sensitive adhesive layer that constitutes the protective film is preferably soft to some extent so that the pressure during lamination is evenly transmitted. Conventionally, a pressure sensitive adhesive layer containing an acrylic-based resin has been used.

However, the peel force tends to increase when the pressure sensitive adhesive layer containing an acrylic-based resin is softened. For this reason, there is a problem that the protective film cannot be suitably peeled off from the polymer film after lamination in some cases.

Hence, the present inventors have conducted intensive studies. As a result, the present inventors have found out that the pressure sensitive adhesive layer is softened as well as exhibits light peelability when a pressure sensitive adhesive layer containing a urethane-based resin is used. However, a new problem arises in that a urethane-based resin generates a gelled product in the manufacturing process, so the gelled product is transferred to a polymer film as a foreign substance and stains the polymer film when the urethane-based resin is used in the pressure sensitive adhesive layer of the protective film.

Hence, the present inventors have further conducted intensive studies. As a result, the present inventors have found out that the transfer of a gelled product to the polymer film can be suppressed by using a urethane-based resin from which the gelled product has been removed in the pressure sensitive adhesive layer, and have completed the present invention.

MEANS FOR SOLVING THE PROBLEMS

In other words, a laminated film according to the present invention includes: a heat-resistant polymer film; and a first protective film laminated on one surface of the heat-resistant polymer film, and in the laminated film, the first protective film includes a first base material and a first pressure sensitive adhesive layer provided on the first base material, the first base material, the first pressure sensitive adhesive layer, and the heat-resistant polymer film are laminated in this order, the first base material is a polyester film or a polyolefin film, the first pressure sensitive adhesive layer contains a urethane-based resin, and a maximum diameter of a gelled product in the first pressure sensitive adhesive layer is 14 $\mu$m or less.

According to the configuration, since the first pressure sensitive adhesive layer contains a urethane-based resin, the pressure sensitive adhesive layer can be softened as well as can exhibit light peelability. In addition, since the maximum diameter of a gelled product in the first pressure sensitive adhesive layer is 14 $\mu$m or less, the transfer of the gelled product to the heat-resistant polymer film can be suppressed.

In the configuration, it is preferable that the first pressure sensitive adhesive layer contains an ultraviolet absorber, and

the laminated film is used after being cut with an ultraviolet laser.

According to the configuration, by irradiation with an ultraviolet laser from the first protective film side, the first protective film and the heat-resistant polymer film can be suitably cut, and peeling off of the first protective film and the heat-resistant polymer film from each other at the cut surface can be suppressed. This is clear from Examples as well.

The present inventors presume the reason for this as follows.

When irradiation with an ultraviolet laser is performed from the first protective film side, the ultraviolet laser passes through the first base material, but does not pass through the first pressure sensitive adhesive layer containing an ultraviolet absorber, thus the ultraviolet rays are first absorbed at the interface portion between the first pressure sensitive adhesive layer and the first base material, and the interface portion is locally heated to a high temperature. After that, the first base material is first perforated. In other words, a hole is first opened in the first base material direction from the interface with a high temperature. This is because the first base material evaporates while the first base material and the first pressure sensitive adhesive layer are not peeled off from each other by the heat due to the ultraviolet laser since the first base material and the first pressure sensitive adhesive layer are relatively firmly glued (the peel strength between the first base material and the first pressure sensitive adhesive layer is large). After that, the first pressure sensitive adhesive layer and the heat-resistant polymer film are successively heated to a high temperature to evaporate. The first protective film and the heat-resistant polymer film are thus cut. Evaporated and scattered smear does not remain on the side surface of the cut surface, and scatters outside the first base material from the surface on the first base material side.

As described above, the protective film and the heat-resistant polymer film are suitably cut without being deformed or scorched. Peeling off of the protective film and the heat-resistant polymer film from each other at the cut surface is suppressed.

In the configuration, it is preferable that the 90° peel strength between the heat-resistant polymer film and the first protective film is 0.002 N/cm or more and 0.2 N/cm or less.

When the 90° peel strength is 0.2 N/cm or less, the first protective film can be suitably peeled off when the heat-resistant polymer film is used. When the 90° peel strength between the heat-resistant polymer film and the first protective film is 0.2 N/cm or less, the close contact force between the heat-resistant polymer film and the first protective film is weak, and foreign substances transferred from the first pressure sensitive adhesive layer to the heat-resistant polymer film surface can be suppressed. When transferred foreign substances exist on the heat-resistant polymer film, the transferred foreign substances cause outgassing in the process of forming a functional element on the heat-resistant polymer film surface as a post-process. When the 90° peel strength is 0.002 N/cm or more, at the stage before the heat-resistant polymer film is used (for example, during transportation), unintentional peeling off of the first protective film from the heat-resistant polymer film can be suppressed. By selecting a polyurethane-based pressure sensitive adhesive layer that exhibits favorable wettability with the heat-resistant polymer film (for example, polyimide film) and has low peeling force as the first pressure sensitive adhesive layer, such peel strength can be achieved.

In the configuration, it is preferable that the number of foreign substances transferred from the first pressure sensitive adhesive layer to the heat-resistant polymer film is 7000 pieces/cm$^2$ or less.

When the number of transferred foreign substances is 7000/cm$^2$ or less, it is possible to avoid troubles caused by outgassing from the foreign substances in the subsequent process of forming a functional element at a high temperature.

In the configuration, it is preferable that the Martens hardness of the first pressure sensitive adhesive layer is 40 N/mm$^2$ or less.

When the Martens hardness of the first pressure sensitive adhesive layer is 40 N/mm$^2$ or less, the wettability between the heat-resistant polymer film and the first pressure sensitive adhesive layer is favorable, unevenness and wrinkling are less likely to occur during lamination of the heat-resistant polymer film and the first protective film, and processing is easy. When the Martens hardness of the first pressure sensitive adhesive layer is 40 N/mm$^2$ or less, air bubbles are less likely to enter between the first pressure sensitive adhesive layer and the heat-resistant polymer film when the nip pressure during lamination of the heat-resistant polymer film and the first protective film is lowered as well, thus processing at a lower pressure is possible, and as a result, the number of foreign substances transferred from the first pressure sensitive adhesive layer to the heat-resistant polymer film surface can be decreased.

In the configuration, it is preferable that the first base material is a polyethylene terephthalate film.

When the first base material is a polyethylene terephthalate film, the first base material has appropriate hardness and flexibility for protecting the heat-resistant polymer film, and is suitable as a base material for the first protective film. A polyethylene terephthalate film transmits ultraviolet rays (does not absorb ultraviolet rays significantly), but by combining the polyethylene terephthalate film with a pressure sensitive adhesive layer containing an ultraviolet absorber, the first base material can also be favorably cut with an ultraviolet laser suitable for cutting of the heat-resistant polymer film. The mechanism of this is as described above. When the first base material is a material that does not transmit ultraviolet rays, the first base material absorbs a large quantity of energy of the ultraviolet laser, a longer time is required for cutting, and there is a case where the protective film and polymer film cannot be economically cut in a short time.

In the configuration, it is preferable that the heat-resistant polymer film is a polyimide film.

When the heat-resistant polymer film is a polyimide film, the heat-resistant polymer film exhibits excellent heat resistance. When the heat-resistant polymer film is a polyimide film, the heat-resistant polymer film can be suitably cut with an ultraviolet laser.

In the configuration, it is preferable that the laminated film includes a second protective film laminated on the other surface of the heat-resistant polymer film.

When the laminated film includes the second protective film, both surfaces of the heat-resistant polymer film can be protected before use.

A laminated film manufacturing method according to the present invention is a laminated film manufacturing method, in which the laminated film includes a heat-resistant polymer film and a first protective film laminated on one surface of the heat-resistant polymer film, the first protective film includes a first base material and a first pressure sensitive adhesive layer provided on the first base material, the first base material, the first pressure sensitive adhesive layer, and the heat-resistant polymer film are laminated in this order, and the first base material is a polyester film or a polyolefin film, and which includes: a step X of filtering a pressure sensitive adhesive composition containing a urethane-based resin through a filter having a filter diameter of 0.2 $\mu$m or more and 10 $\mu$m or less; and a step Y of applying the filtered pressure sensitive adhesive composition to form a first pressure sensitive adhesive layer.

According to the configuration, since a pressure sensitive adhesive composition containing a urethane-based resin is filtered through a filter having a filter diameter of 0.2 $\mu$m or more and 10 $\mu$m or less (step X) and the filtered pressure sensitive adhesive composition is applied to form the first pressure sensitive adhesive layer (step Y), large foreign substances (gelled products) are removed from the first pressure sensitive adhesive layer as much as possible. Since large foreign substances (gelled products) in the first pressure sensitive adhesive layer are removed as much as possible, transfer of gelled products to the heat-resistant polymer film can be suppressed. Since a pressure sensitive adhesive composition containing a urethane-based resin is used, the pressure sensitive adhesive layer can be softened as well as can exhibit light peelability in a laminated film manufactured by this manufacturing method.

Furthermore, in a case where the first pressure sensitive adhesive layer contains an ultraviolet absorber, the heat-resistant polymer film and the first protective film can be suitably cut into a desired size without being deformed or scorched by using an ultraviolet laser. Peeling off of the first protective film and the heat-resistant polymer film from each other at the cut surface can be suppressed. Hence, in the laminate including the heat-resistant polymer film and the first protective film as well, peeling off of the first protective film and the heat-resistant polymer film from each other can be suppressed.

A laminate according to the present invention includes an inorganic substrate, a silane coupling agent layer, a heat-resistant polymer film, and a first protective film laminated in this order, and in the laminate, the first protective film includes a first base material and a first pressure sensitive adhesive layer provided on the first base material, the first base material, the first pressure sensitive adhesive layer, and the heat-resistant polymer film are laminated in this order, the first base material is a polyester film or a polyolefin film, the first pressure sensitive adhesive layer contains a urethane-based resin, and a maximum diameter of a gelled product in the first pressure sensitive adhesive layer is 14 μm or less.

According to the configuration, since the first pressure sensitive adhesive layer contains a urethane-based resin, the pressure sensitive adhesive layer can be softened as well as can exhibit light peelability. In addition, since the maximum diameter of a gelled product in the first pressure sensitive adhesive layer is 14 μm or less, the transfer of the gelled product to the heat-resistant polymer film can be suppressed.

A laminate manufacturing method according to the present invention includes: a step A of preparing a first laminate including an inorganic substrate and a silane coupling agent layer; a step B of preparing the laminated film described above; a step C of irradiating the laminated film with an ultraviolet laser from a first protective film side to cut the first protective film and the heat-resistant polymer film into a predetermined shape; a step D of peeling off the second protective film from the heat-resistant polymer film after the step C, and a step E of bonding the silane coupling agent layer of the first laminate and the heat-resistant polymer film together after the step D to obtain a laminate in which the inorganic substrate, the silane coupling agent layer, the heat-resistant polymer film, and the first protective film are laminated in this order.

According to the configuration, the laminated film is irradiated with an ultraviolet laser from the first protective film side to cut the first protective film and the heat-resistant polymer film into a predetermined shape (step C). The first protective film includes a first base material formed of a polyester film or a polyolefin film and a first pressure sensitive adhesive layer provided on the polyester film, and the first pressure sensitive adhesive layer contains an ultraviolet absorber, thus the first protective film and the heat-resistant polymer film are suitably cut with an ultraviolet laser, and peeling off of the first protective film and the heat-resistant polymer film from each other at the cut surface can be suppressed.

After the step C, the second protective film is peeled off from the heat-resistant polymer film (step D), and the silane coupling agent layer of the first laminate and the heat-resistant polymer film are bonded together to obtain a laminate in which the inorganic substrate, the silane coupling agent layer, the heat-resistant polymer film, and the first protective film are laminated in this order (step E).

In the laminate thus obtained, the pressure sensitive adhesive layer can be softened as well as can exhibit light peelability. In addition, since the maximum diameter of a gelled product in the first pressure sensitive adhesive layer is 14 μm or less, the transfer of the gelled product to the heat-resistant polymer film can be suppressed.

EFFECT OF THE INVENTION

According to the present invention, it is possible to provide a laminated film in which a pressure sensitive adhesive layer can be softened as well as can exhibit light peelability and transfer of a gelled product to a heat-resistant polymer film can be suppressed. It is also possible to provide a method for manufacturing the laminated film. It is also possible to provide a laminate in which a pressure sensitive adhesive layer can be softened as well as can exhibit light peelability and transfer of a gelled product to a heat-resistant polymer film can be suppressed. It is also possible to provide a method for manufacturing the laminate.

BRIEF DESCRIPTION OF THE DRAWINGS

Fig. 1 is a diagram schematically illustrating an example of a silane coupling agent treatment apparatus used in a vapor deposition method.
Fig. 2 is a diagram for explaining a laminate manufacturing method according to the present embodiment.
Fig. 3 is a diagram for explaining a laminate manufacturing method according to the present embodiment.
Fig. 4 is a diagram for explaining a laminate manufacturing method according to the present embodiment.
Fig. 5A is a diagram for explaining a laminate manufacturing method according to the present embodiment.
Fig. 5B is a diagram for explaining a laminate manufacturing method according to the present embodiment.
Fig. 6 is a diagram for explaining a laminate manufacturing method according to the present embodiment.

MODE FOR CARRYING OUT THE INVENTION

Hereinafter, embodiments of the present invention will be described.

<Laminated film>

The laminated film according to the present embodiment includes a heat-resistant polymer film, a first protective film laminated on one surface of the heat-resistant polymer film, and a second protective film laminated on the other surface of the heat-resistant polymer film. In the present embodiment, a case where the laminated film includes the second protective film will be described, but the present invention is not limited to this example, and the second protective film may not be provided. In other words, the laminated film of the present invention is only required to include at least the heat-resistant polymer film and the first protective film.

<Heat-resistant polymer film>

In the present specification, the heat-resistant polymer is a polymer having a melting point of preferably 250°C or more, more preferably 300°C or more, still more preferably 400°C or more. The heat-resistant polymer is a polymer having a glass transition temperature of 200°C or more, more preferably 320°C or more, still more preferably 380°C or more. Hereinafter, the heat-resistant polymer is also simply referred to as a polymer in order to avoid complication. In the present specification, the melting point and the glass transition temperature are determined by differential thermal analysis (DSC). Incidentally, in a case where the melting point exceeds 500°C, whether the temperature has reached the melting point may be judged by visually observing the thermal deformation behavior when the heat-resistant polymer is heated at this temperature.

Examples of the heat-resistant polymer film (hereinafter, also simply referred to as a polymer film) includes films of polyimide-based resins (for example, aromatic polyimide resin and alicyclic polyimide resin) such as polyimide, polyamide-imide, polyetherimide, and fluorinated polyimide; copolymerized polyesters (for example, fully aromatic polyesters and semi-aromatic polyesters) such as polyethylene, polypropylene, polyethylene terephthalate, polybutylene terephthalate, and polyethylene-2,6-naphthalate; copolymerized (meth)acrylates represented by polymethylmethacrylate; polycarbonates; polyamides; polysulfones; polyethersulfones; polyetherketones; cellulose acetates; cellulose nitrates; aromatic polyamides; polyvinyl chloride; polyphenols; polyarylates; polyphenylene sulfides; polyphenylene oxides; and polystyrenes.

However, since the polymer film is premised on being used in a process involving heat treatment at 300°C or more, those that can actually be adopted among the exemplified polymer films are limited. Among the polymer films, a film obtained using a so-called super engineering plastic is preferable, and more specific examples include an aromatic polyimide film, an aromatic amide film, an aromatic amideimide film, an aromatic benzoxazole film, an aromatic benzothiazole film, and an aromatic benzimidazole film.

The details of the polyimide-based resin films (referred to as polyimide films in some cases) which are an example of the polymer film will be described below. Generally, a polyimide-based resin film is obtained by applying a polyamic acid (polyimide precursor) solution which is obtained by a reaction between a diamine and a tetracarboxylic acid in a solvent, to a support for polyimide film fabrication, drying the solution to form a green film (hereinafter, also called as a "polyamic acid film"), and treating the green film by heat at a high temperature to cause a dehydration ring-closure reaction on the support for polyimide film fabrication or in a state of being peeled off from the support.

For the application of the polyamic acid (polyimide precursor) solution, it is possible to appropriately use, for example, conventionally known solution application means such as spin coating, doctor blade, applicator, comma coater, screen printing method, slit coating, reverse coating, dip coating, curtain coating, and slit die coating.

Diamines constituting polyamic acid are not particularly limited, and aromatic diamines, aliphatic diamines, alicyclic diamines and the like that are commonly used in polyimide synthesis may be used. From the viewpoint of heat resistance, aromatic diamines are preferable. The diamines can be used singly or in combination of two or more kinds thereof.

The diamines are not particularly limited, and examples thereof include oxydianiline (bis(4-aminophenyl) ether and para-phenylenediamine (1,4-phenylenediamine).

As tetracarboxylic acids constituting polyamic acid, aromatic tetracarboxylic acids (including anhydrides thereof), aliphatic tetracarboxylic acids (including anhydrides thereof) and alicyclic tetracarboxylic acids (including anhydrides thereof), which are usually used for polyimide synthesis, can be used. In a case where these are acid anhydrides, the acid anhydrides may have one anhydride structure or two anhydride structures in the molecule, but one (dianhydride) having two anhydride structures in the molecule is preferable. The tetracarboxylic acids may be used singly or in combination of two or more kinds thereof.

The tetracarboxylic acid is not particularly limited, and examples thereof include pyrolimetic dianhydride and 3,3',4,4'-biphenyltetracarboxylic dianhydride.

The polyimide film may be a transparent polyimide film.

Colorless and transparent polyimide, which is an example of the polymer film, will be described. In order to avoid complication, colorless and transparent polyimide is simply referred to as transparent polyimide. As the transparency of transparent polyimide, it is preferable that the total light transmittance is 75% or more. The total light transmittance is more preferably 80% or more, still more preferably 85% or more, yet still more preferably 87% or more, particularly preferably 88% or more. The upper limit of the total light transmittance of transparent polyimide is not particularly limited, but is preferably 98% or less, more preferably 97% or less for use as a flexible electronic device. The colorless and transparent polyimide in the present invention is preferably polyimide having a total light transmittance of 75% or more.

Examples of the aromatic tetracarboxylic acids for obtaining highly colorless and transparent polyimide include tetracarboxylic acids such as 4,4'-(2,2-hexafluoroisopropyridene)diphthalic acid, 4,4'-oxydiphthalic acid, bis(1,3-dioxo-1,3-dihydro-2-benzofuran-5-carboxylic acid) 1,4-phenylene, bis(1,3-dioxo-1,3-dihydro-2-benzofuran-5-yl)benzene-1,4-dicarboxylate, 4,4'-[4,4'-(3-oxo-1,3-dihydro-2-benzofuran-1,1-diyl) bis(benzene-1,4-diyloxy)]dibenzene-1,2-dicarboxylic acid, 3,3',4,4'-benzophenonetetracarboxylic acid, 4,4'-[(3-oxo-1,3-dihydro-2-benzofuran-1,1-diyl) bis(toluene-2,5-diyloxy)]dibenzene-1,2-dicarboxylic acid, 4,4'-[(3-oxo-1,3-dihydro-2-benzofuran-1,1-diyl) bis(1,4-xylene-2,5-diyloxy)]dibenzene-1,2-dicarboxylic acid, 4,4'-[4,4'-(3-oxo-1,3-dihydro-2-benzofuran-1,1-diyl) bis(4-isopropyltoluene-2,5-diyloxy)]dibenzene-1,2-dicarboxylic acid, 4,4'-[4,4'-(3-oxo-1,3-dihydro-2-benzofuran-1,1-diyl) bis(naphthalene-1,4-diyloxy)]dibenzene-1,2-dicarboxylic acid, 4,4'-[4,4'-(3H-2,1-benzoxathiol-1,1-dioxide-3,3-diyl) bis(benzene-1,4-diyloxy)]dibenzene-1,2-dicarboxylic acid, 4,4'-benzophenone tetracarboxylic acid, 4,4'-[(3H-2,1-benzoxathiol-1,1-dioxide-3,3-diyl) bis(toluene-2,5-diyloxy)]dibenzene-1,2-dicarboxylic acid, 4,4'-[(3H-2,1-benzoxathiol-1,1-dioxide-3,3-diyl) bis(1,4-xylene-2,5-diyloxy)]dibenzene-1,2-dicarboxylic acid, 4,4'-[4,4'-(3H-2,1-benzoxathiol-1,1-dioxide-3,3-diyl) bis(4-isopropyltoluene-2,5-diyloxy)]dibenzene-1,2-dicarboxylic acid, 4,4'-[4,4'-(3H-2,1-benzoxathiol-1,1-dioxide-3,3-diyl) bis(naphthalene-1,4-diyloxy)]dibenzene-1,2-dicarboxylic acid, 3,3',4,4'-benzophenonetetracarboxylic acid, 3,3',4,4'-benzophenonetetracarboxylic acid, 3,3',4,4'-diphenylsulfonetetracarboxylic acid, 3,3',4,4'-biphenyltetracarboxylic acid, 2,3,3',4'-biphenyltetracarboxylic acid, pyromellitic acid, 4,4'-[spiro(xanthene-9,9'-fluorene)-2,6-diyl bis(oxycarbonyl)]diphthalic acid, and 4,4'-[spiro(xanthene-9,9'-fluorene)-3,6-diyl bis(oxycarbonyl)] diphthalic acid, and acid anhydrides thereof. Among these, dianhydrides having two acid anhydride structures are suitable, and particularly 4,4'-(2,2-hexafluoroisopropyridene)diphthalic dianhydride and 4,4'-oxydiphthalic dianhydride are preferable. The aromatic tetracarboxylic acids may be used singly or in combination of two or more kinds thereof. For obtaining high heat resistance, the amount of the aromatic tetracarboxylic acids copolymerized is, for example, preferably 50% by mass or more, more preferably 60% by mass or more, still more preferably 70% by mass or more, yet still more preferably 80% by mass or more, particularly preferably 90% by mass or more of the total amount of all the tetracarboxylic acids, and may be 100% by mass.

Examples of the alicyclic tetracarboxylic acids include tetracarboxylic acids such as 1,2,3,4-cyclobutanetetracarboxylic acid, 1,2,3,4-cyclopentanetetracarboxylic acid, 1,2,3,4-cyclohexanetetracarboxylic acid, 1,2,4,5-cyclohexanetetracarboxylic acid, 3,3',4,4'-bicyclohexyltetracarboxylic acid, bicyclo[2,2,1]heptane-2,3,5,6-tetracarboxylic acid, bicyclo[2,2,2]octane-2,3,5,6-tetracarboxylic acid, bicyclo[2,2,2]octo-7-ene-2,3,5,6-tetracarboxylic acid, tetrahydroanthracene-2,3,6,7-tetracarboxylic acid, tetradecahydro-1,4:5,8:9,10-trimethanoanthracene-2,3,6,7-tetracarboxylic acid, decahydronaphthalene-2,3,6,7-tetracarboxylic acid, decahydro-1,4:5,8-dimethanonaphthalene-2,3,6,7-tetracarboxylic acid, decahydro-1,4-ethano-5,8-methanonaphthalene-2,3,6,7-tetracarboxylic acid, norbornane-2-spiro-a-cyclopentanone-a'-spiro-2"-norbornane-5,5",6,6"-tetracarboxylic acid (also known as "norbornane-2-spiro-2'-cyclopentanone-5'-spiro-2"-norbornane-5,5",6,6''-tetracarboxylic acid"), methylnorbornane-2-spiro-a-cyclopentanone-a'-spiro-2"-(methylnorbornane)-5,5",6,6''-tetracarboxylic acid, norbornane-2-spiro-$\alpha$-cyclohexanone-a'-spiro-2"-norbornane-5,5",6,6''-tetracarboxylic acid (also known as "norbornane-2-spiro-2'-cyclohexanone-6'-spiro-2"-norbornane-5,5",6,6"-tetracarboxylic acid"), methylnorbornane-2-spiro-$\alpha$-cyclohexanone-$\alpha$'-spiro-2"-(methylnorbornane)-5,5",6,6"-tetracarboxylic acid, norbornane-2-spiro-$\alpha$-cyclopropanone-$\alpha$'-spiro-2"-norbornane-5,5",6,6"-tetracarboxylic acid, norbornane-2-spiro-$\alpha$-cyclobutanone-$\alpha$'-spiro-2"-norbornane-5,5",6,6"-tetracarboxylic acid, norbornane-2-spiro-$\alpha$-cycloheptanone-$\alpha$'-spiro-2"-norbornane-5,5",6,6"-tetracarboxylic acid, norbornane-2-spiro-a-cyclooctanone-a'-spiro-2"-norbornane-5,5",6,6"-tetracarboxylic acid, norbornane-2-spiro-$\alpha$-cyclononanone-a'-spiro-2"-norbornane-5,5",6,6"-tetracarboxylic acid, norbornane-2-spiro-$\alpha$-cyclodecanone-$\alpha$'-spiro-2"-norbornane-5,5",6,6"-tetracarboxylic acid, norbornane-2-spiro-$\alpha$-cycloundecanone-$\alpha$'-spiro-2"-norbornane-5,5",6,6"-tetracarboxylic acid, norbornane-2-spiro-$\alpha$-cyclododecanone-$\alpha$'-spiro-2"-norbornane-5,5",6,6"-tetracarboxylic acid, norbornane-2-spiro-$\alpha$-cyclotridecanone-$\alpha$'-spiro-2"-norbornane-5,5",6,6"-tetracarboxylic acid, norbornane-2-spiro-$\alpha$-cyclotetradecanone-$\alpha$'-spiro-2"-norbornane-5,5",6,6"-tetracarboxylic acid, norbornane-2-spiro-$\alpha$-cyclopentadecanone-$\alpha$'-spiro-2"-norbornane-5,5",6,6"-tetracarboxylic acid, norbornane-2-spiro-$\alpha$-(methylcyclopentanone)-$\alpha$'-spiro-2"-norbornane-5,5",6,6"-tetracarboxylic acid, and norbornane-2-spiro-$\alpha$-(methylcyclohexanone)-$\alpha$'-spiro-2"-norbornane-5,5",6,6"-tetracarboxylic acid, and acid anhydrides thereof. Among these, dianhydrides having two acid anhydride structures are suitable, particularly 1,2,3,4-cyclobutanetetracarboxylic dianhydride, 1,2,3,4-cyclohexanetetracarboxylic dianhydride, and 1,2,4,5-cyclohexanetetracarboxylic dianhydride are preferable, 1,2,3,4-cyclobutanetetracarboxylic dianhydride and 1,2,4,5-cyclohexanetetracarboxylic dianhydride are more preferable, and 1,2,3,4-cyclobutanetetracarboxylic dianhydride is still more preferable. These may be used singly or in combination of two or more kinds thereof. For obtaining high transparency, the amount of the aromatic tetracarboxylic acids copolymerized is, for example, preferably 50% by mass or more, more preferably 60% by mass or more, still more preferably 70% by mass or more, yet still more preferably 80% by mass or more, particularly preferably 90% by mass or more of the total amount of all the tetracarboxylic acids, and may be 100% by mass.

Examples of the tricarboxylic acids include aromatic tricarboxylic acids such as trimellitic acid, 1,2,5-naphthalenetricarboxylic acid, diphenyl ether-3,3',4'-tricarboxylic acid, and diphenylsulfone-3,3',4'-tricarboxylic acid, or hydrogenated products of the aromatic tricarboxylic acids such as hexahydrotrimellitic acid, and alkylene glycol bistrimellitates such as ethylene glycol bistrimellitate, propylene glycol bistrimellitate, 1,4-butanediol bistrimellitate, and polyethylene glycol bistrimellitate and monoanhydrides and esterified products thereof. Among these, monoanhydrides having one acid anhydride structure are suitable, and particularly trimellitic anhydride and hexahydrotrimellitic anhydride are preferable. These may be used singly or a plurality of these may be used in combination.

Examples of the dicarboxylic acids include aromatic dicarboxylic acids such as terephthalic acid, isophthalic acid, orthophthalic acid, naphthalenedicarboxylic acid, and 4,4'-oxydibenzenecarboxylic acid, or hydrogenated products of the aromatic dicarboxylic acids such as 1,6-cyclohexanedicarboxylic acid, and oxalic acid, succinic acid, glutaric acid, adipic acid, heptanedioic acid, octanedioic acid, azelaic acid, sebacic acid, undecanedioic acid, dodecanedioic acid, and 2-methylsuccinic acid and acid chlorides or esterified products thereof. Among these, aromatic dicarboxylic acids and hydrogenated products thereof are suitable, and particularly terephthalic acid, 1,6-cyclohexanedicarboxylic acid, and 4,4'-oxydibenzenecarboxylic acid are preferable. The dicarboxylic acids may be used singly or a plurality of these may be used in combination.

The diamines or isocyanates for obtaining highly colorless and transparent polyimide are not particularly limited, and it is possible to use aromatic diamines, aliphatic diamines, alicyclic diamines, aromatic diisocyanates, aliphatic diisocyanates, alicyclic diisocyanates and the like that are usually used in the polyimide synthesis, polyamide-imide synthesis, and polyamide synthesis. Aromatic diamines are preferable from the viewpoint of heat resistance, and alicyclic diamines are preferable from the viewpoint of transparency. When aromatic diamines having a benzoxazole structure are used, a high elastic modulus, low heat shrinkability, and a low coefficient of linear thermal expansion as well as high heat resistance can be exerted. The diamines and isocyanates may be used singly or in combination of two or more kinds thereof.

Examples of the aromatic diamines include: 2,2'-dimethyl-4,4'-diaminobiphenyl; 1,4-bis[2-(4-aminophenyl)-2-propyl]benzene; 1,4-bis(4-amino-2-trifluoromethylphenoxy)benzene; 2,2'-ditrifluoromethyl-4,4'-diaminobiphenyl; 4,4'-bis(4-aminophenoxy)biphenyl; 4,4'-bis(3-aminophenoxy)biphenyl; bis[4-(3-aminophenoxy)phenyl]ketone; bis[4-(3-aminophenoxy)phenyl]sulfide; bis[4-(3-aminophenoxy)phenyl] sulfone; 2,2-bis[4-(3-aminophenoxy)phenyl]propane; 2,2-bis[4-(3-aminophenoxy)phenyl]-1,1,1,3,3,3-hexafluoropropane; m-phenylenediamine; o-phenylenediamine; p-phenylenediamine; m-aminobenzylamine; p-aminobenzylamine; 4-amino-N-(4-aminophenyl)benzamide; 3,3'-diaminodiphenylether; 3,4'-diaminodiphenylether; 4,4'-diaminodiphenylether; 2,2'-trifluoromethyl-4,4'-diaminodiphenylether; 3,3'-diaminodiphenylsulfide; 3,4'-diaminodiphenylsulfide; 4,4'-diaminodiphenylsulfide; 3,3'-diaminodiphenylsulfoxide; 3,4'-diaminodiphenylsulfoxide; 4,4'-diaminodiphenylsulfoxide; 3,3'-diaminodiphenyl sulfone; 3,4'-diaminodiphenyl sulfone; 4,4'-diaminodiphenyl sulfone; 3,3'-diaminobenzophenone; 3,4'-diaminobenzophenone; 4,4'-diaminobenzophenone; 3,3'-diaminodiphenylmethane; 3,4'-diaminodiphenylmethane; 4,4'-diaminodiphenylmethane; bis[4-(4-aminophenoxy)phenyl]methane; 1,1-bis[4-(4-aminophenoxy)phenyl]ethane; 1,2-bis[4-(4-aminophenoxy)phenyl]ethane; 1,1-bis[4-(4-aminophenoxy)phenyl]propane; 1,2-bis[4-(4-aminophenoxy)phenyl]propane; 1,3-bis[4-(4-aminophenoxy)phenyl]propane; 2,2-bis[4-(4-aminophenoxy)phenyl]propane; 1,1-bis[4-(4-aminophenoxy)phenyl]butane; 1,3-bis[4-(4-aminophenoxy)phenyl]butane; 1,4-bis[4-(4-aminophenoxy)phenyl]butane; 2,2-bis[4-(4-aminophenoxy)phenyl]butane; 2,3-bis[4-(4-aminophenoxy)phenyl]butane; 2-[4-(4-aminophenoxy)phenyl]-2-[4-(4-aminophenoxy)-3-methylphenyl]propane; 2,2-bis[4-(4-aminophenoxy)-3-methylphenyl]propane; 2-[4-(4-aminophenoxy)phenyl]-2-[4-(4-aminophenoxy)-3,5-dimethylphenyl]propane; 2,2-bis[4-(4-aminophenoxy)-3,5-dimethylphenyl]propane; 2,2-bis[4-(4-aminophenoxy)phenyl]-1,1,1,3,3,3-hexafluoropropane; 1,4-bis(3-aminophenoxy)benzene; 1,3-bis(3-aminophenoxy)benzene; 1,4-bis(4-aminophenoxy)benzene; 4,4'-bis(4-aminophenoxy)biphenyl; bis[4-(4-aminophenoxy)phenyl]ketone; bis[4-(4-aminophenoxy)phenyl]sulfide; bis[4-(4-aminophenoxy)phenyl]sulfoxide; bis[4-(4-aminophenoxy)phenyl] sulfone; bis[4-(3-aminophenoxy)phenyl]ether; bis[4-(4-aminophenoxy)phenyl]ether; 1,3-bis[4-(4-aminophenoxy)benzoyl]benzene; 1,3-bis[4-(3-aminophenoxy)benzoyl]benzene; 1,4-bis[4-(3-aminophenoxy)benzoyl]benzene; 4,4'-bis[(3-aminophenoxy)benzoyl]benzene; 1,1-bis[4-(3-aminophenoxy)phenyl]propane; 1,3-bis[4-(3-aminophenoxy)phenyl]propane; 3,4'-diaminodiphenylsulfide; 2,2-bis[3-(3-aminophenoxy)phenyl]-1,1,1,3,3,3-hexafluoropropane; bis[4-(3-aminophenoxy)phenyl]methane; 1,1-bis[4-(3-aminophenoxy)phenyl]ethane; 1,2-bis[4-(3-aminophenoxy)phenyl]ethane; bis[4-(3-aminophenoxy)phenyl]sulfoxide; 4,4'-bis[3-(4-aminophenoxy)benzoyl]diphenylether; 4,4'-bis[3-(3-aminophenoxy)benzoyl]diphenylether; 4,4'-bis[4-(4-amino-α,α-dimethylbenzyl)phenoxylbenzophenone; 4,4'-bis[4-(4-amino-α,α-dimethylbenzyl)phenoxy]diphenyl sulfone; bis[4-{4-(4-aminophenoxy)phenox}phenyl] sulfone; 1,4-bis[4-(4-aminophenoxy)phenoxy-α,α-dimethylbenzyl]benzene; 1,3-bis[4-(4-aminophenoxy)phenoxy-α,α-dimethylbenzyl]benzene; 1,3-bis[4-(4-amino-6-trifluoromethylphenoxy)-α,α-dimethylbenzyl]benzene; 1,3-bis[4-(4-amino-6-fluorophenoxy)-α,α-dimethylbenzyl]benzene; 1,3-bis[4-(4-amino-6-methylphenoxy)-α,α-dimethylbenzyl]benzene; 1,3-bis[4-(4-amino-6-cyanophenoxy)-α,α-dimethylbenzyl]benzene; 3,3'-diamino-4,4'-diphenoxybenzophenone; 4,4'-diamino-5,5'-diphenoxybenzophenone; 3,4'-diamino-4,5-diphenoxybenzophenone; 3,3'-diamino-4-phenoxybenzophenone; 4,4'-diamino-5-phenoxybenzophenone, 3,4'-diamino-4-phenoxybenzophenone; 3,4'-diamino-5'-phenoxybenzophenone; 3,3'-diamino-4,4'-dibiphenoxybenzophenone; 4,4'-diamino-5,5'-dibiphenoxybenzophenone; 3,4'-diamino-4,5'-dibiphenoxybenzophenone; 3,3'-diamino-4-biphenoxybenzophenone; 4,4'-diamino-5-biphenoxybenzophenone; 3,4'-diamino-4-biphenoxybenzophenone; 3,4'-diamino-5'-biphenoxybenzophenone; 1,3-bis(3-amino-4-phenoxybenzoyl)benzene; 1,4-bis(3-amino-4-phenoxybenzoyl)benzene; 1,3-bis(4-amino-5-phenoxybenzoyl)benzene; 1,4-bis(4-amino-5-phenoxybenzoyl)benzene; 1,3-bis(3-amino-4-biphenoxybenzoyl)benzene, 1,4-bis(3-amino-4-biphenoxybenzoyl)benzene; 1,3-bis(4-amino-5-biphenoxybenzoyl)benzene; 1,4-bis(4-amino-5-biphenoxybenzoyl)benzene; 2,6-bis[4-(4-amino-$\alpha,\alpha$-dimethylbenzyl)phenoxy]benzonitrile; 4,4'-[9H-fluorene-9,9-diyl]bisaniline (also known as "9,9-bis(4-aminophenyl)fluorene"); spiro(xanthene-9,9'-fluorene)-2,6-diyl bis(oxycarbonyl)]bisaniline; 4,4'-[spiro(xanthene-9,9'-fluorene)-2,6-diyl bis(oxycarbonyl)]bisaniline; and 4,4'-[spiro(xanthene-9,9'-fluorene)-3,6-diyl bis(oxycarbonyl)]bisaniline. A part or all of hydrogen atoms on an aromatic ring of the above-described aromatic diamines may be substituted with halogen atoms; alkyl groups or alkoxyl groups having 1 to 3 carbon atoms; or cyano groups, and further a part or all of hydrogen atoms of the alkyl groups or alkoxyl groups having 1 to 3 carbon atoms may be substituted with halogen atoms. The aromatic diamines having a benzoxazole structure are not particularly limited, and examples thereof include: 5-amino-2-(p-aminophenyl)benzoxazole; 6-amino-2-(p-aminophenyl)benzoxazole; 5-amino-2-(m-aminophenyl)benzoxazole; 6-amino-2-(m-aminophenyl)benzoxazole; 2,2'-p-phenylenebis(5-aminobenzoxazole); 2,2'-p-phenylenebis(6-aminobenzoxazole); 1-(5-aminobenzoxazolo)-4-(6-aminobenzoxazolo)benzene; 2,6-(4,4'-diaminodiphenyl)benzo[1,2-d:5,4-d']bisoxazole; 2,6-(4,4'-diaminodiphenyl)benzo[1,2-d:4,5-d']bisoxazole; 2,6-(3,4'-diaminodiphenyl)benzo[1,2-d:5,4-d']bisoxazole; 2,6-(3,4'-diaminodiphenyl)benzo[1,2-d:4,5-d']bisoxazole; 2,6-(3,3'-diaminodiphenyl)benzo[1,2-d:5,4-d']bisoxazole; and 2,6-(3,3'-diaminodiphenyl)benzo[1,2-d:4,5-d']bisoxazole. Among these, particularly 2,2'-ditrifluoromethyl-4,4'-diaminobiphenyl, 4-amino-N-(4-aminophenyl)benzamide, 4,4'-diaminodiphenyl sulfone, and 3,3'-diaminobenzophenone are preferable. The aromatic diamines may be used singly or a plurality of these may be used in combination.

Examples of the alicyclic diamines include 1,4-diaminocyclohexane, 1,4-diamino-2-methylcyclohexane, 1,4-diamino-2-ethylcyclohexane, 1,4-diamino-2-n-propylcyclohexane, 1,4-diamino-2-isopropylcyclohexane, 1,4-diamino-2-n-butylcyclohexane, 1,4-diamino-2-isobutylcyclohexane, 1,4-diamino-2-sec-butylcyclohexane, 1,4-diamino-2-tert-butylcyclohexane, and 4,4'-methylenebis(2,6-dimethylcyclohexylamine). Among these, particularly 1,4-diaminocyclohexane and 1,4-diamino-2-methylcyclohexane are preferable, and 1,4-diaminocyclohexane is more preferable. The alicyclic diamines may be used singly or a plurality of these may be used in combination.

Examples of the diisocyanates include aromatic diisocyanates such as diphenylmethane-2,4'-diisocyanate, 3,2'- or 3,3'- or 4,2'- or 4,3'- or 5,2'- or 5,3'- or 6,2'- or 6,3'-dimethyldiphenylmethane-2,4'-diisocyanate, 3,2'- or 3,3'- or 4,2'- or 4,3'- or 5,2'- or 5,3'- or 6,2'- or 6,3'-diethyldiphenylmethane-2,4'-diisocyanate, 3,2'- or 3,3'- or 4,2'- or 4,3'- or 5,2'- or 5,3'- or 6,2'- or 6,3'-dimethoxydiphenylmethane-2,4'-diisocyanate, diphenylmethane-4,4'-diisocyanate, diphenylmethane-3,3'-diisocyanate, diphenylmethane-3,4'-diisocyanate, diphenyl ether-4,4'-diisocyanate, benzophenone-4,4'-diisocyanate, diphenylsulfone-4,4'-diisocyanate, tolylene-2,4-diisocyanate, tolylene-2,6-diisocyanate, m-xylylene diisocyanate, p-xylylene diisocyanate, naphthalene-2,6-diisocyanate, 4,4'-(2,2 bis(4-phenoxyphenyl)propane)diisocyanate, 3,3'- or 2,2'-dimethylbiphenyl-4,4'-diisocyanate, 3,3'- or 2,2'-diethylbiphenyl-4,4'-diisocyanate, 3,3'-dimethoxybiphenyl-4,4'-diisocyanate, and 3,3'-diethoxybiphenyl-4,4'-diisocyanate, and hydrogenated diisocyanates of any of these (for example, isophorone diisocyanate, 1,4-cyclohexane diisocyanate, 1,3-cyclohexane diisocyanate, 4,4'-dicyclohexylmethane diisocyanate, and hexamethylene diisocyanate). Among these, diphenylmethane-4,4'-diisocyanate, tolylene-2,4-diisocyanate, tolylene-2,6-diisocyanate, 3,3'-dimethylbiphenyl-4,4'-diisocyanate, naphthalene-2,6-diisocyanate, 4,4'-dicyclohexylmethane diisocyanate, and 1,4-cyclohexane diisocyanate are preferable from the viewpoint of low moisture absorption property, dimensional stability, price, and polymerizability. The diisocyanates may be used singly or a plurality of these may be used in combination.

In the present embodiment, the polymer film is preferably a polyimide film. When the polymer film is a polyimide film, the polymer film exhibits excellent heat resistance. When the polymer film is a polyimide film, the laminate can be suitably cut with an ultraviolet laser.

The thickness of the polymer film is preferably 3 μm or more, more preferably 7 μm or more, still more preferably 14 μm or more, yet still more preferably 20 μm or more. The upper limit of the thickness of the polymer film is not particularly limited but is preferably 250 μm or less, more preferably 100 μm or less, still more preferably 50 μm or less for use as a flexible electronic device.

The average coefficient of linear thermal expansion (CTE) of the polymer film at between 30°C and 250°C is preferably 50 ppm/K or less. The CTE is more preferably 45 ppm/K or less, still more preferably 40 ppm/K or less, yet still more preferably 30 ppm/K or less, particularly preferably 20 ppm/K or less. The CTE is preferably -5 ppm/K or more, more preferably -3 ppm/K or more, still more preferably 1 ppm/K or more. When the CTE is in the above range, a small difference in coefficient of linear thermal expansion between the polymer film and a general support (inorganic substrate) can be maintained, and the polymer film and the inorganic substrate can be prevented from peeling off from each other or warping together with the support when being subjected to a process of applying heat as well. Here, CTE is a factor that indicates reversible expansion and contraction with respect to temperature. The CTE of the polymer film refers to the average value of the CTE in the application direction (MD direction) of the polymer solution or polymer precursor solution and the CTE in the transverse direction (TD direction). The method for measuring CTE of the polymer film is as described in Examples.

In a case where the polymer film is a transparent polyimide film, the yellowness index (hereafter, also referred to as "yellow index" or "YI") of the transparent polyimide film is preferably 10 or less, more preferably 7 or less, still more preferably 5 or less, yet still more preferably 3 or less. The lower limit of the yellowness index of the transparent polyimide is not particularly limited, but is preferably 0.1 or more, more preferably 0.2 or more, still more preferably 0.3 or more for use as a flexible electronic device.

When the polymer film is a transparent polyimide film, the haze of the transparent polyimide film is preferably 1.0 or less, more preferably 0.8 or less, still more preferably 0.5 or less, yet still more preferably 0.3 or less. The lower limit of haze is not particularly limited, but industrially, there is no problem when the haze is 0.01 or more and the haze may be 0.05 or more.

The heat shrinkage rate of the polymer film at between 30°C and 500°C is preferably ± 0.9% or less, still more preferably ± 0.6 or less%. The heat shrinkage rate is a factor that represents irreversible expansion and contraction with respect to the temperature.

The tensile breaking strength of the polymer film is preferably 60 MPa or more, more preferably 80 MP or more, still more preferably 100 MPa or more. The upper limit of the tensile breaking strength is not particularly limited but is practically less than about 1000 MPa. When the tensile breaking strength is 60 MPa or more, it is possible to prevent the polymer film from breaking when being peeled off from the inorganic substrate. The tensile breaking strength of the polymer film refers to the average value of the tensile breaking strength in the machine direction (MD direction) and the tensile breaking strength in the transverse direction (TD direction) of the polymer film. The method for measuring the tensile breaking strength of the polymer film is as described in Examples.

The tensile breaking elongation of the polymer film is preferably 1% or more, more preferably 5% or more, still more preferably 10% or more. When the tensile breaking elongation is 1% or more, the handleability is excellent. The tensile breaking elongation of the polymer film refers to the average value of the tensile breaking elongation in the machine direction (MD direction) and the tensile breaking elongation in the transverse direction (TD direction) of the polymer film. The method for measuring the tensile breaking elongation of the polymer film is as described in Examples.

The tensile modulus of elasticity of the polymer film is preferably 2.5 GPa or more, more preferably 3 GPa or more, still more preferably 4 GPa or more. When the tensile modulus of elasticity is 2.5 GPa or more, the polymer film is less expanded and deformed when being peeled off from the inorganic substrate and exhibits excellent handleability. The tensile modulus of elasticity is preferably 20 GPa or less, more preferably 15 GPa or less, still more preferably 12 GPa or less. When the tensile modulus of elasticity is 20 GPa or less, the polymer film can be used as a flexible film. The tensile modulus of elasticity of the polymer film refers to the average value of the tensile modulus of elasticity in the machine direction (MD direction) and the tensile modulus of elasticity in the transverse direction (TD direction) of the polymer film. The method for measuring the tensile modulus of elasticity of the polymer film is as described in Examples.

Unevenness of the thickness of the polymer film is preferably 20% or less, more preferably 12% or less, still more preferably 7% or less, particularly preferably 4% or less. When the unevenness of the thickness exceeds 20%, the polymer film tends to be hardly adopted to a narrow portion. Incidentally, unevenness of the thickness of a film can be determined based on the following equation from film thicknesses, which are measured at about 10 randomly extracted positions of a film to be measured by using, for example, a contact-type film thickness meter.

```
Unevenness of thickness of film (%)

= 100 × (maximum film thickness - minimum film

thickness) ÷ average film thickness
```

The polymer film is preferably obtained in the form of being wound as a long polymer film having a width of 300 mm or more and a length of 10 m or more at the time of production, more preferably in the form of a roll-shaped polymer film wound around a winding core. When the polymer film is wound in a roll shape, it is easy to transport the polymer film in the form of a polymer film wound in a roll shape.

In order to secure handleability and productivity of the polymer film, a lubricant (particles) having a particle size of about 10 to 1000 nm is preferably added to/contained in the polymer film at about 0.03 to 3% by mass to impart fine unevenness to the surface of the polymer film and secure slipperiness.

<First protective film>

The first protective film includes a first base material and a first pressure sensitive adhesive layer provided on the first base material. The first base material is a polyester film or a polyolefin film. The first pressure sensitive adhesive layer contains a urethane-based resin.

The first pressure sensitive adhesive layer is laminated so as to face the polymer film. In other words, the first base material, the first pressure sensitive adhesive layer, and the polymer film are laminated in this order.

It is only required that the first base material, the first pressure sensitive adhesive layer, and the polymer film are laminated in this order, and another layer may be present between the first pressure sensitive adhesive layer and the polymer film, or the first pressure sensitive adhesive layer and the polymer film may be laminated so as to be in direct contact with each other.

(First base material)

The first base material is a polyester film or a polyolefin film from the viewpoint of handleability.

A polyolefin film specifically refers to a film formed using a polyethylene resin or a polypropylene resin as a main component. The term "main component" means that a component is contained in the polyolefin film at 50% by mass or more, preferably 75% by mass or more, more preferably 90% by mass or more, particularly preferably 100% by mass.

In the present specification, a polyester film refers to a film formed using a polyester resin as a main component. The term "main component" means that a component is contained in the polyester film at 50% by mass or more, preferably 75% by mass or more, more preferably 90% by mass or more, particularly preferably 100% by mass.

Examples of the polyester resin include polyethylene terephthalate, polybutylene terephthalate, polyethylene-2,6-naphthalate, and polymethylene terephthalate. Examples of copolymerization components include diol components such as ethylene glycol, terephthalic acid, diethylene glycol, neopentyl glycol, and polyalkylene glycol; and dicarboxylic acid components such as adipic acid, sebacic acid, phthalic acid, isophthalic acid, and 2,6-naphthalenedicarboxylic acid.

Among the polyester resins, polyethylene terephthalate is preferable. In other words, the first base material is preferably a polyethylene terephthalate film. When the first base material is a polyethylene terephthalate film, the first base material has appropriate hardness and flexibility for protecting the polymer film, and is suitable as a base material for the first protective film. A polyethylene terephthalate film transmits ultraviolet rays (does not absorb ultraviolet rays significantly), but by combining the polyethylene terephthalate film with a pressure sensitive adhesive layer containing an ultraviolet absorber, the first base material can also be favorably cut with an ultraviolet laser suitable for cutting of the polymer film. The mechanism of this is as described above. When the first base material is a material that does not transmit ultraviolet rays, the first base material absorbs a large quantity of energy of the ultraviolet laser, a longer time is required for cutting, and there is a case where the protective film and polymer film cannot be economically cut in a short time.

The first base material may be a single layer, or may be a laminate of a plurality of layers having the same composition, or may be a laminate of a plurality of layers having different compositions. The respective layers may be layers having known functions such as prevention of static charge and prevention of close contact.

The first base material may contain various additives in the resin if necessary. Examples of the additives include fillers, antioxidants, light stabilizers, anti-gelling agents, organic wetting agents, antistatic agents, surfactants, pigments, and dyes. However, it is preferable that the additives are contained in a range in which the first base material satisfies the following numerical range in ultraviolet transmittance measurement. The first base material preferably does not contain an ultraviolet absorber. Examples of the ultraviolet absorber include those described later.

In a case where the polymer film is colorless and transparent, it is preferable to color the base material of the first protective film with a pigment or dye. When the base material of the first protective film is colored, it is easy to perform position alignment using a color difference sensor or the like in the step of laminating the first protective film and the inorganic substrate.

The transmittance of the first base material at a wavelength of 355 nm is preferably 70% or more, more preferably 80% or more, still more preferably 90% or more, particularly preferably 95% or more in ultraviolet transmittance measurement (UV transmittance measurement). When the transmittance of the first base material at a wavelength of 355 nm is 70% or more, the first protective film and the polymer film can be more suitably cut with an ultraviolet laser.

The thickness of the first base material is not particularly limited, but can be arbitrarily determined, for example, within the range of 12 $\mu$m or more and 500 $\mu$m or less according to the standards used. The thickness of the first base material is more preferably 25 $\mu$m or more and 350 $\mu$m or less. When the thickness of the first base material is 500 $\mu$m or less, decreases in productivity and handleability can be suppressed. When the thickness of the first base material is 12 $\mu$m or more, insufficient mechanical strength of the first base material can be improved and breakage during peeling off can be prevented.

The first base material can be formed as a film by a conventionally known film forming method. Examples of the film forming method include a film forming method by calendaring, a casting method in an organic solvent, an inflation extrusion method in a closed system, a T-die extrusion method, a co-extrusion method, and a dry lamination method.

(First pressure sensitive adhesive layer)

The first pressure sensitive adhesive layer contains a urethane-based resin. A pressure sensitive adhesive layer containing a urethane-based resin exhibits favorable wettability to a polymer film (for example, a polyimide film), and thus exhibits favorable handleability. Since the pressure sensitive adhesive layer containing a urethane-based resin has weak adhesive force to a polymer film, the number of foreign substances transferred from the pressure sensitive adhesive layer can be decreased.

The Martens hardness of the first pressure sensitive adhesive layer is preferably 40 $N/mm^2$ or less, more preferably 35 $N/mm^2$ or less, still more preferably 30 $N/mm^2$ or less. When the Martens hardness of the first pressure sensitive adhesive layer is 40 $N/mm^2$ or less, the wettability between the polymer film and the first pressure sensitive adhesive layer is favorable, unevenness and wrinkling are less likely to occur during lamination of the polymer film and the first protective film, and processing is easy. When the Martens hardness of the first pressure sensitive adhesive layer is 40 $N/mm^2$ or less, air bubbles are less likely to enter between the first pressure sensitive adhesive layer and the polymer film when the nip pressure during lamination of the polymer film and the first protective film is lowered as well, thus processing at a lower pressure is possible, and as a result, the number of foreign substances transferred from the first pressure sensitive adhesive layer to the polymer film surface can be decreased. The Martens hardness is preferably 12 $N/mm^2$ or more, more preferably 15 $N/mm^2$ or more from the viewpoint of suppressing breakage of the pressure sensitive adhesive layer during peeling off from the heat-resistant polymer film.

The urethane-based resin preferably contains a urethane resin and a crosslinking agent.

The urethane resin is a resin having a plurality of hydroxyl groups and can be synthesized by reacting a polyol with a polyisocyanate.

The polyol refers to an organic compound having a plurality (2 or 3 or more) of hydroxyl groups (preferably at least one of an alcoholic hydroxyl group or a phenolic hydroxyl group) in one molecule. The polyisocyanate refers to an organic compound (polyfunctional isocyanate) having a plurality (2 or 3 or more) of isocyanate groups (also referred to as isocyanato groups), namely (-N=C=O) in one molecule.

In the present specification, polyurethane polyol refers to a prepolymer of polyurethane having a plurality of hydroxyl groups.

In the present specification, a urethane prepolymer refers to a prepolymer of polyurethane that has a plurality of isocyanate groups (for example, at both ends of the molecule) and can be thus converted into a polyurethane that has been further polymerized or crosslinked unless otherwise stated.

The urethane resin may be the urethane prepolymer. A urethane prepolymer refers to a polymer that is in a state of undergone polymerization or crosslinking halfway and can further undergo polymerization or crosslinking. The prepolymer of polyurethane or urethane prepolymer refers to a polyurethane that is in a state of undergone polymerization or crosslinking halfway and can be converted into a polyurethane that has been further polymerized or crosslinked. The prepolymer of polyurethane has, for example, a plurality of hydroxyl groups or isocyanate groups and can be thus converted into a polyurethane that has been further polymerized or crosslinked.

The polyol is not particularly limited. For example, as described above, the polyol may be bifunctional (dihydric, that is, has two hydroxyl groups in one molecule) or tri- or more functional (trihydric or more, that is, has 3 or more hydroxyl groups in the molecule), but is preferably tri- or more functional, particularly preferably trifunctional. As the polyol, one kind of polyol may be used singly or plural kinds of polyols may be used in combination. The polyol is not particularly limited, but examples thereof include one or both of polyester polyols and polyether polyols.

The polyester polyol is not particularly limited, and examples thereof include known polyester polyols. Examples of the acid component of the polyester polyol include terephthalic acid, adipic acid, azelaic acid, sebacic acid, phthalic anhydride, isophthalic acid, and trimellitic acid. Examples of the glycol component of the polyester polyol include ethylene glycol, propylene glycol, diethylene glycol, butylene glycol, 1,6-hexane glycol, 3-methyl-1,5-pentanediol, 3,3'-dimethylolheptane, polyoxyethylene glycol, polyoxypropylene glycol, 1,4-butanediol, neopentyl glycol, and butylethylpentanediol. Examples of the polyol component of the polyester polyol include glycerin, trimethylolpropane, and pentaerythritol. Other examples include polyester polyols obtained by ring-opening polymerization of lactones such as polycaprolactone, poly(β-methyl-γ-valerolactone) and polyvalerolactone.

The molecular weight of the polyester polyol is not particularly limited, and a polyester polyol having a low molecular weight to a polyester polyol having a high molecular weight can be used. Preferably, a polyester polyol having a number average molecular weight of 500 to 5,000 is used. When the number average molecular weight is 500 or more, it is easy to prevent gelation due to too high reactivity. When the number average molecular weight is 5,000 or less, it is easy to prevent a decrease in the reactivity and a decrease in the cohesive force of polyurethane polyol itself. The polyester polyol may be used or may not be used, but the amount of the polyester polyol in a case of being used is, for example, 10 to 90 mol% of the amount of polyols constituting the polyurethane polyol.

The polyether polyol is not particularly limited, and examples thereof include known polyether polyols. Specifically, the polyether polyol may be, for example, a polyether polyol obtained by polymerizing an oxirane compound such as ethylene oxide, propylene oxide, butylene oxide, or tetrahydrofuran using water or a low molecular weight polyol such as propylene glycol, ethylene glycol, glycerin, or trimethylolpropane as an initiator. More specifically, the polyether polyol may be, for example, one having two or more functional groups, such as polypropylene glycol, polyethylene glycol, or polytetramethylene glycol. The molecular weight of the polyether polyol is not particularly limited, and a polyether polyol having a low molecular weight to a polyether polyol having a high molecular weight can be used. Preferably, a polyether polyol having a number average molecular weight of 1,000 to 15,000 is used. When the number average molecular weight is 1000 or more, it is easy to prevent gelation due to too high reactivity. When the number average molecular weight is 15,000 or less, it is easy to prevent a decrease in the reactivity and a decrease in the cohesive force of polyurethane polyol itself. The polyether polyol may be used or may not be used, but the amount of the polyether polyol in a case of being used is, for example, 20 to 80 mol% of the amount of polyols constituting the polyurethane polyol.

If necessary, a part of the polyether polyol may be substituted with glycols such as ethylene glycol, 1,4-butanediol, neopentyl glycol, butylethylpentanediol, glycerin, trimethylolpropane, and pentaerythritol; and polyvalent amines such as ethylenediamine, N-aminoethylethanolamine, isophoronediamine, and xylylenediamine, and the substitution products may be used in combination.

The polyol may be a bifunctional polyether polyol (having two hydroxyl groups in one molecule), but is preferably tri- or more functional (having 3 or more hydroxyl groups in one molecule). In particular, by partially or wholly using a polyol, which has a number average molecular weight of 1,000 to 15,000 and is tri- or more functional, it is easier to balance pressure sensitive adhesive force and repeelability. When the number average molecular weight is 1,000 or more, it is easy to prevent gelation due to too high reactivity of tri- or more functional polyol. When the number average molecular weight is 15,000 or less, it is easy to prevent a decrease in the reactivity of tri- or more functional polyol and a decrease in the cohesive force of polyurethane polyol itself. More preferably, a polyol, which has a number average molecular weight of 2,500 to 3,500 and is tri- or more functional, is used partially or wholly.

The polyisocyanate (organic polyisocyanate compound) is not particularly limited, but examples thereof include known aromatic polyisocyanates, aliphatic polyisocyanates, araliphatic polyisocyanates, and alicyclic polyisocyanates. As the polyisocyanate, one kind of polyisocyanate may be used singly or plural kinds of polyisocyanates may be used in combination.

Examples of the aromatic polyisocyanates include 1,3-phenylene diisocyanate, 4,4'-diphenyldiisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenylether diisocyanate, and 4,4',4''-triphenylmethane triisocyanate.

Examples of the aliphatic polyisocyanates include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the araliphatic polyisocyanates include $\omega,\omega'$-diisocyanate-1,3-dimethylbenzene, $\omega,\omega'$-diisocyanate-1,4-dimethylbenzene, $\omega,\omega'$-diisocyanate-1,4-diethylbenzene, 1,4-tetramethylxylylene diisocyanate, and 1,3-tetramethylxylylene diisocyanate.

Examples of the alicyclic polyisocyanates include 3-isocyanatomethyl-3,5,5-trimethylcyclohexyl isocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), 1,4-bis(isocyanatomethyl)cyclohexane, and 1,4-bis(isocyanatomethyl)cyclohexane.

Partially, trimethylolpropane adducts, water-reacted biuret forms, trimers having an isocyanurate ring, and the like of the polyisocyanates can also be used in combination.

As the polyisocyanate, 4,4'-diphenylmethane diisocyanate, hexamethylene diisocyanate, 3-isocyanatomethyl-3,5,5-trimethylcyclohexyl isocyanate (isophorone diisocyanate) and the like are preferable.

The reaction catalyst is not particularly limited, and for example, a known catalyst can be used. Examples of the catalyst include tertiary amine-based compounds and organometallic compounds.

Examples of the tertiary amine-based compounds include triethylamine, triethylenediamine, and 1,8-diazabicyclo(5,4,0)-undecene-7 (DBU).

Examples of the organometallic compounds include tin-based compounds and non-tin-based compounds. Examples of the tin-based compounds include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate. Examples of the non-tin-based compounds include titanium-based compounds such as dibutyl titanium dichloride, tetrabutyl titanate, and butoxy titanium trichloride; lead-based compounds such as lead oleate, lead 2-ethylhexanoate, lead benzoate, and lead naphthenate; iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium naphthenate.

In a case of using these catalysts, for example, in a system in which two kinds of polyols, a polyester polyol and a polyether polyol, are present, problems are likely to arise that gelation occurs or the reaction solution become turbid by the difference in reactivity between the polyols in a single catalyst system. In such a case, for example, it is possible to control the reaction rate, catalyst selectivity and the like and to solve these problems by using two or more kinds of catalysts in combination. As the combination, combination of tertiary amine/organometallic catalysts, combination of tin-based/non-tin-based catalysts, and combination of tin-based/tin-based catalysts may be used, but combination of tin-based/tin-based catalysts is preferable, and combination of dibutyltin dilaurate and tin 2-ethylhexanoate is still more preferable. The ratio of catalysts blended is not particularly limited, but for example, the ratio of tin 2-ethylhexanoate/dibutyltin dilaurate blended is less than 1, preferably 0.2 to 0.6 by weight. When the blended ratio is less than 1, it is easy to prevent gelation due to the balance of catalytic activity. The amount of these catalysts used is not particularly limited, but is, for example, 0.01 to 1.0% by weight with respect to the total amount of polyol and organic polyisocyanate.

In a case of using the catalyst, the reaction temperature for synthesizing the polyurethane polyol is preferably less than 100°C, more preferably 40°C to 60°C. When the reaction temperature is less than 100°C, it is easy to control the reaction rate and the crosslinked structure, and it is easy to obtain a polyurethane polyol having a predetermined molecular weight.

In a case where the catalyst is not used (catalyst-free), the reaction temperature for synthesizing the polyurethane polyol is preferably 100°C or more, more preferably 110°C or more. Under the catalyst-free condition, the reaction time for synthesizing the polyurethane polyol is preferably 3 hours or more.

The solvent used for synthesizing the polyurethane polyol is not particularly limited, and for example, known solvents can be used. Examples of the solvent include ketones such as methyl ethyl ketone, acetone and methyl isobutyl ketone, esters such as ethyl acetate, n-butyl acetate and isobutyl acetate, and hydrocarbons such as toluene and xylene. Toluene is particularly preferable from the viewpoint of the solubility of polyurethane polyol, the boiling point of the solvent, and the like.

From the viewpoint of preventing unnecessary crosslinking (curing) during storage, for example, the urethane resin and the crosslinking agent may be stored in a state of not being mixed. In this case, for example, the pressure sensitive adhesive may be prepared by mixing the urethane resin and the crosslinking agent prior to application to the base material during the manufacture of the pressure sensitive adhesive sheet. Alternatively, the urethane resin and the crosslinking agent may be mixed and a crosslinking inhibitor (crosslinking retarder) may be contained so as to prevent unnecessary crosslinking (curing) during storage of the pressure sensitive adhesive.

The first pressure sensitive adhesive layer may contain or may not contain other components as appropriate. Examples of the other components include solvents, antioxidants, crosslinking inhibitors (crosslinking retarders), fillers, coloring agent, antifoaming agents, and light stabilizers. The antioxidants are not particularly limited, but examples thereof include phenol-based and sulfur-based antioxidants. The antifoaming agents are not particularly limited, but examples thereof include silicone-based and mineral oil-based antifoaming agents. The light stabilizers are not particularly limited, but examples thereof include hindered amine-based light stabilizers. The first pressure sensitive adhesive layer may contain or may not contain, for example, a plasticizer as the other component. By containing the plasticizer, for example, an effect of suppressing an increase in adhesive force over time can be acquired. The "increase in adhesive force over time" refers to a phenomenon in which the adhesive force to the adherend surface increases with the lapse of time after pasting in a case where a pressure sensitive adhesive is pasted to the adherend surface (for example, in the form of a pressure sensitive adhesive sheet). By suppressing this increase in adhesive force over time, for example, the repeelability of the pressure sensitive adhesive or pressure sensitive adhesive sheet is further improved and the contamination resistance to the adherend surface is also further improved.

Other polyols and polyisocyanates that can be used include the compounds described in WO 2018/207938 and JP-A-2001-102636.

The first pressure sensitive adhesive layer preferably contains an ultraviolet absorber. Known ultraviolet absorbers can be used as the ultraviolet absorber. Examples of the ultraviolet absorber include organic ultraviolet absorbers and inorganic ultraviolet absorbers, but organic ultraviolet absorbers are preferable from the viewpoint of transparency.

Examples of the organic ultraviolet absorbers include benzotriazole-based, benzophenone-based, and cyclic iminoester-based ultraviolet absorbers, and combinations thereof. Among these, benzotriazole-based and cyclic iminoester-based ultraviolet absorbers are particularly preferable from the viewpoint of durability.

Examples of the benzotriazole-based ultraviolet absorbers include 2-[2'-hydroxy-5'-(methacryloyloxymethyl)phenyl]-2H-benzotriazole, 2-[2'-hydroxy-5'-(methacryloyloxyethyl) phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-( methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole, and 2-[2'-hydroxy-5'-(methacryloyloxyethylphenyl]-5-nitro-2H-benzotriazole.

Examples of the benzophenone-based ultraviolet absorbers include 2,2',4,4'-tetrahydroxybenzophenone, 2,2'-dihydroxy-4,4'-dimethoxybenzophenone, 2,2'-dihydroxy-4-methoxybenzophenone, 2,4-dihydroxybenzophenone, 2-hydroxy-4-acetoxyethoxybenzophenone, 2-hydroxy-4-methoxybenzophenone, 2,2'-dihydroxy-4-methoxybenzophenone, 2,2'-dihydroxy-4,4'-dimethoxybenzophenone, 2-hydroxy-4-n-octoxybenzophenone, and 2,2'-dihydroxy-4,4'-dimethoxy-5,5'-disulfobenzophenone disodium salt.

Examples of the cyclic iminoester-based ultraviolet absorbers include 2,2'-(1,4-phenylene)bis(4H-3,1-benzoxazin-4-one), 2-methyl-3,1-benzoxazin-4-one, 2-butyl-3,1-benzoxazin-4-one, 2-phenyl-3,1-benzoxazin-4-one, 2-(1-or 2-naphthyl)-3,1-benzoxazin-4-one, 2-(4-biphenyl)-3,1-benzoxazin-4-one, 2-p-nitrophenyl-3,1-benzoxazin-4-one, 2-m-nitrophenyl-3,1-benzoxazine-4-one, 2-p-benzoylphenyl-3,1-benzoxazin-4-one, 2-p-methoxyphenyl-3,1-benzoxazin-4-one, 2-o-methoxyphenyl-3,1-benzoxazin-4-one, 2-cyclohexyl-3,1-benzoxazin-4-one, 2-p-(or m-)phthalimidophenyl-3,1-benzoxazin-4-one, 2,2'-(1,4-phenylene)bis(4H-3,1-benzoxazinone-4-one) 2,2'-bis(3,1-benzoxazin-4-one), 2,2'-ethylenebis(3,1-benzoxazin-4-one), 2,2'-tetramethylenebis(3,1-benzoxazin-4-one), 2,2'-decamethylenebis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6- or 1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), 2,2'-(2-chloro-p-phenylene)bis(3,1-benzoxazine)-4-one), 2,2'-(1,4-cyclohexylene)bis(3,1-benzoxazin-4-one), and 1,3,5-tri(3,1-benzoxazin-4-one-2-yl)benzene.

In addition, 1,3,5-tri(3,1-benzoxazin-4-one-2-yl)naphthalene and 2,4,6-tri(3,1-benzoxazin-4-one-2-yl)naphthalene, 2,8-dimethyl-4H,6H-benzo(1,2-d;5,4-d')bis-(1,3)-oxazine-4,6-dione, 2,7-dimethyl-4H,9H-benzo(1,2-d;5,4-d')bis-(1,3)-oxazine-4,9-dione, 2,8-diphenyl-4H,8H-benzo(1,2-d;5,4-d')bis-(1,3)-oxazine-4,6-dione, 2,7-diphenyl-4H,9H-benzo(1,2-d;5,4-d')bis-(1,3)-oxazine-4,6-dione, 6,6'-bis(2-methyl-4H,3,1-benzoxazin-4-one), 6,6'-bis(2-ethyl-4H,3,1-benzoxazin-4-one), 6,6'-bis(2-phenyl-4H,3,1-benzoxazin-4-one), 6,6'-methylenebis(2-methyl-4H,3,1-benzoxazin-4-one), 6,6'-methylenebis(2-phenyl-4H,3,1-benzoxazin-4-one), 6,6'-ethylenebis(2-methyl-4H,3,1-benzoxazin-4-one), 6,6'-ethylenebis(2-phenyl-4H,3,1-benzoxazin-4-one), 6,6'-butylenebis(2-methyl-4H,3,1-benzoxazin-4-one), 6,6'-butylenebis(2-phenyl-4H,3,1-benzoxazin-4-one), 6,6'-oxybis(2-methyl-4H,3,1-benzoxazin-4-one), 6,6'-oxybis(2-phenyl-4H,3,1-benzoxazin-4-one), 6,6'-sulfonylbis(2-methyl-4H,3,1-benzoxazin-4-one), 6,6'-sulfonylbis(2-phenyl-4H,3,1-benzoxazin-4-one), 6,6'-carbonylbis(2-methyl-4H,3,1-benzoxazin-4-one), 6,6'-carbonylbis(2-phenyl-4H,3,1-benzoxazin-4-one), 7,7'-methylenebis(2-methyl-4H,3,1-benzoxazin-4-one), 7,7'-methylenebis(2-phenyl-4H,3,1-benzoxazin-4-one), 7,7'-bis(2-methyl-4H,3,1-benzoxazin-4-one), 7,7'-ethylenebis(2-methyl-4H,3,1-benzoxazin-4-one), 7,7'-oxybis(2-methyl-4H,3,1-benzoxazin-4-one), 7,7'-sulfonylbis(2-methyl-4H,3,1-benzoxazin-4-one), 7,7'-carbonylbis(2-methyl-4H,3,1-benzoxazin-4-one), 6,7'-bis(2-methyl-4H,3,1-benzoxazin-4-one), 6,7'-bis(2-phenyl-4H,3,1-benzoxazin-4-one), 6,7'-methylenebis(2-methyl-4H,3,1-benzoxazin-4-one), 6,7'-methylenebis(2-phenyl-4H,3,1-benzoxazin-4-one) and the like can also be used as cyclic iminoester-based ultraviolet absorbers.

The content of the ultraviolet absorber is not particularly limited, but is preferably such that the measured value is within the following numerical range in the ultraviolet transmittance measurement (UV transmittance measurement) of the first protective film. For example, the content of the ultraviolet absorber is preferably 0.1 to 10% by weight, more preferably 0.3 to 3% by weight when the entire first pressure sensitive adhesive layer is regarded as 100% by weight.

The thickness of the first pressure sensitive adhesive layer is not particularly limited, but may be usually 3 to 200 μm, and is preferably 5 to 30 μm.

The first pressure sensitive adhesive layer is obtained by applying a pressure sensitive adhesive composition solution onto the first base material to form a coating film, and then drying the coating film under predetermined conditions. The coating method is not particularly limited, and examples thereof include roll coating, screen coating, and gravure coating. As the drying conditions, drying is performed, for example, at a drying temperature of 80 to 150°C for a drying time of 0.5 to 5 minutes. The first pressure sensitive adhesive layer may also be formed by applying a pressure sensitive adhesive composition onto a separator to form a coating film, and then drying the coating film under the drying conditions described above. After that, the first pressure sensitive adhesive layer is bonded onto the first base material together with a separator. The first protective film is thus obtained.

The first pressure sensitive adhesive layer is manufactured through a filtering step (step X) before application to the first base material. Filtration accuracy (filter diameter) is preferably 0.2 μm to 10 μm, more preferably 0.2 μm to 5 μm. When the filtration accuracy is 0.2 μm or more, a long time or a high pressure is not required to filter the pressure sensitive adhesive. **For** this reason, the filtration accuracy of 0.2 μm or more is suitable for industrial processes. When the filtration accuracy is 10 μm or less, foreign substances (gelled products and the like) in the pressure sensitive adhesive, which may become foreign substances transferred to the engineering plastic film, can be suitably removed and the number of foreign substances transferred to the engineering plastic film can be decreased.

The maximum diameter of gelled products in the first pressure sensitive adhesive layer is 14 μm or less,

preferably 12.5 $\mu$m or less, more preferably 11 $\mu$m or less. When the maximum diameter of gelled products is measured, fibrous materials and the like that are clearly not gelled products are excluded from the measurement target. The method for measuring the maximum diameter of gelled products in the first pressure sensitive adhesive layer is as described in Examples.

A gelled product larger than the filtration accuracy used for filtering (filter diameter: 0.2 $\mu$m to 10 $\mu$m) may be observed. This is because gelled products are significantly soft and a gelled product having a size slightly larger than the filter diameter also passes through the filter.

The transmittance of the first protective film at a wavelength of 355 nm is preferably 30% or less, more preferably 20% or less, still more preferably 15% or less in the ultraviolet transmittance measurement (UV transmittance measurement). When the transmittance of the first protective film at a wavelength of 355 nm is 30% or less, the first protective film and the polymer film can be more suitably cut with an ultraviolet laser.

The 90° peel strength between the polymer film and the first protective film is preferably 0.002 N/cm or more and 0.2 N/cm or less, more preferably 0.003 N/cm or more and 0.15 N/cm or less. When the 90° peel strength is 0.2 N/cm or less, the first protective film can be suitably peeled off when the polymer film is used, and the number of foreign substances transferred from the first pressure sensitive adhesive layer can be decreased. When the 90° peel strength is 0.002 N/cm or more, at the stage before the polymer film is used (for example, during transportation), unintentional peeling off of the first protective film from the polymer film can be suppressed.

The number of foreign substances transferred from the first pressure sensitive adhesive layer to the polymer film is preferably 7000 pieces/cm$^2$ or less, more preferably 5000 pieces/cm$^2$ or less. By suppressing the number of transferred foreign substances to 7000/cm$^2$ or less, it is possible to avoid troubles caused by outgassing from the foreign substances in the subsequent process of forming a functional element at a high temperature. It is preferable that the number of transferred foreign substances is as small as possible, but in reality, the number is, for example, 700/cm$^2$ or more, or 1000/cm$^2$ or more. The number of foreign substances transferred from the first pressure sensitive adhesive layer to the heat-resistant polymer surface is counted by the method described in Examples.

<Second protective film>

The second protective film is pasted to the other surface of the polymer film until the polymer film is used. The configuration of the second protective film is not particularly limited as long as it can be peeled off from the polymer film when the polymer film is used. Examples of the second protective film include a configuration having a second base material and a second pressure sensitive adhesive layer provided on the second base material.

(Second base material)

Examples of the material for the second base material include polyolefin resins such as polyethylene and polypropylene; and polyamide resins such as nylon 6 and nylon 66 in addition to the polyester resins described in the section of the first base material. These may be used in mixture.

As the first base material does, the second base material may contain various additives in the resin if necessary. Examples of the additives include those described in the section of the first base material. The second base material may contain an ultraviolet absorber. Examples of the ultraviolet absorber include those described in the section of the first pressure sensitive adhesive layer.

(Second pressure sensitive adhesive layer)

The second pressure sensitive adhesive layer is not particularly limited, and preferably silicone-based, acrylic-based, or urethane-based pressure sensitive adhesives can be used. However, the second pressure sensitive adhesive layer may not contain an ultraviolet absorber.

The laminated film manufacturing method includes:
a step X of filtering a pressure sensitive adhesive composition containing a urethane-based resin through a filter having a filter diameter of 0.2 $\mu$m or more and 10 $\mu$m or less; and a step Y of applying the filtered pressure sensitive adhesive composition to form a first pressure sensitive adhesive layer.

As the laminated film manufacturing method, a known method can be adopted except that the step X and the step Y are carried out. For example, the first protective film and the polymer film are fabricated separately, the first protective film is bonded to one surface of the polymer film, and if necessary, a second protective film is bonded to the other surface of the polymer film, whereby the laminated film can be obtained.

The 90° peel strength between the polymer film and the second protective film is preferably 0.002 N/cm or more and 0.2 N/cm or less, more preferably 0.003 N/cm or more and 0.15 N/cm or less. When the 90° peel strength is 0.3 N/cm or less, the second protective film can be suitably peeled off when the polymer film is used. When the 90° peel strength is 0.002 N/cm or more, at the stage before the polymer film is used (for example, during transportation), unintentional peeling off of the second protective film from the polymer film can be suppressed.

The laminated film according to the present embodiment has been described above.

Next, the laminate according to the present embodiment will be described.

<Laminate>

The laminate according to the present embodiment includes an inorganic substrate, a silane coupling agent layer, a heat-resistant polymer film, and a first protective film laminated in this order, and in the laminate the first protective film includes a first base material and a first pressure sensitive adhesive layer provided on the first base material, the first base material is a polyester film or a polyolefin film, the first pressure sensitive adhesive layer contains a urethane-based resin, and a maximum diameter of a gelled product in the first pressure sensitive adhesive layer is 14 $\mu$m or less.

The polymer film and the first protective film have been described in the section of the laminated film, and the description thereof will be omitted here.

<Inorganic substrate>

The inorganic substrate may be a plate-type substrate which can be used as a substrate made of an inorganic substance, and examples thereof include those mainly composed of glass plates, ceramic plates, semiconductor wafers, metals and the like and those in which these glass plates, ceramic plates, semiconductor wafers, and metals are laminated, those in which these are dispersed, and those in which fibers of these are contained as the composite of these.

Examples of the glass plates include quartz glass, high silicate glass (96% silica), soda lime glass, lead glass, aluminoborosilicate glass, and borosilicate glass (Pyrex (registered trademark)), borosilicate glass (alkali-free), borosilicate glass (microsheet), aluminosilicate glass and the like. Among these, those having a coefficient of linear thermal expansion of 5 ppm/K or less are desirable, and in the case of a commercially available product, "Corning (registered trademark) 7059", "Corning (registered trademark) 1737", and "EAGLE" manufactured by Corning Inc., "AN100" manufactured by AGC Inc., "OA10" and "OA11" manufactured by Nippon Electric Glass Co., Ltd., "AF32" manufactured by SCHOTT AG, and the like that are glass for liquid crystals are desirable.

The semiconductor wafer is not particularly limited, but examples thereof include a silicon wafer and wafers of germanium, silicon-germanium, gallium-arsenide, aluminum-gallium-indium, nitrogen-phosphorus-arsenic-antimony, SiC, InP (indium phosphide), InGaAs, GaInNAs, LT, LN, ZnO (zinc oxide), CdTe (cadmium telluride), ZnSe (zinc selenide) and the like. Among these, the wafer preferably used is a silicon wafer, and a mirror-polished silicon wafer having a size of 8 inches or more is particularly preferable.

The metals include single element metals such as W, Mo, Pt, Fe, Ni, and Au, alloys such as Inconel, Monel, Nimonic, carbon-copper, Fe-Ni-based Invar alloy, and Super Invar alloy, and the like. Multilayer metal plates formed by adding another metal layer or a ceramic layer to these metals are also included. In this case, when the overall coefficient of linear thermal expansion (CTE) with the additional layer is low, Cu, Al and the like are also used in the main metal layer. The metals used as the addition metal layer is not limited as long as they are those that strengthen the close contact property with the polymer film, those having properties that diffusion does not occur and the chemical resistance and heat resistance are favorable, but suitable examples thereof include Cr, Ni, TiN, and Mo-containing Cu.

It is desirable that the flat portion of the inorganic substrate is sufficiently flat. Specifically, the P-V value of the surface roughness is 50 nm or less, more preferably 20 nm or less, and further preferably 5 nm or less. When the surface is coarser than this, the peel strength between the polymer film layer and the inorganic substrate may be insufficient.

The thickness of the inorganic substrate is not particularly limited, but a thickness of 10 mm or less is preferable, a thickness of 3 mm or less is more preferable, and a thickness of 1.3 mm or less is still more preferable from the viewpoint of handleability. The lower limit of the thickness is not particularly limited but is preferably 0.07 mm or more, more preferably 0.15 mm or more, and further preferably 0.3 mm or more.

<Silane coupling agent layer>

A silane coupling agent layer containing a silane coupling agent is provided on the inorganic substrate.

The silane coupling agent has an action of enhancing the adhesive force between the inorganic substrate and the polymer film by being physically or chemically interposed between the inorganic substrate and the polymer film.

The coupling agent is not particularly limited, but a silane coupling agent having an amino group or an epoxy group is preferable. Preferred specific examples of the silane coupling agent include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl N-(1,3-dimethyl-butylidene)propylamine, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatepropyltriethoxysilane, tris-(3-trimethoxysilylpropyl)isocyanurate, chloromethylphenetyltrimethoxysilane, chloromethyltrimethoxysilane, aminophenyltrimethoxysilane, aminophenethyltrimethoxysilane, and aminophenylaminomethylphenethyltrimethoxysilane.

As the silane coupling agent, in addition to the above, n-propyltrimethoxysilane, butyltrichlorosilane, 2-cyanoethyltriethoxysilane, cyclohexyltrichlorosilane, decyltrichlorosilane, diacetoxydimethylsilane, diethoxydimethylsilane, dimethoxydimethylsilane, dimethoxydiphenylsilane, dimethoxymethylphenylsilane, dodecyltrichlorosilane, dodecyltrimethoxysilane, ethyltrichlorosilane, hexyltrimethoxysilane, octadecyltriethoxysilane, octadecyltrimethoxysilane, n-octyltrichlorosilane, n-octyltriethoxysilane, n-octyltrimethoxysilane, triethoxyethylsilane, triethoxymethylsilane, trimethoxymethylsilane, trimethoxyphenylsilane, pentyltriethoxysilane, pentyltrichlorosilane, triacetoxymethylsilane, trichlorohexylsilane, trichloromethylsilane, trichlorooctadecylsilane, trichloropropylsilane, trichlorotetradecylsilane, trimethoxypropylsilane, allyltrichlorosilane, allyltriethoxysilane, allyltrimethoxysilane, diethoxymethylvinylsilane, dimethoxymethylvinylsilane, trichlorovinylsilane, triethoxyvinylsilane, vinyltris(2-methoxyethoxy)silane, trichloro-2-cyanoethylsilane, diethoxy(3-glycidyloxypropyl)methylsilane, 3-glycidyloxypropyl(dimethoxy)methylsilane, 3-glycidyloxypropyltrimethoxysilane, and the like may also be used.

Among the silane coupling agents, silane coupling agents having one silicon atom in one molecule are particularly preferable, and examples thereof include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethyl-butylidene)propylamine, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, aminophenyltrimethoxysilane, aminophenetyltrimethoxysilane, and aminophenylaminomethylphenetyltrimethoxysilane. In a case where particularly high heat resistance is required in the process, a silane coupling agent, in which an aromatic group links Si and an amino group to each other, is desirable.

As the coupling agent, in addition to the above, 1-mercapto-2-propanol, methyl 3-mercaptopropionate, 3-mercapto-2-butanol, butyl 3-mercaptopropionate, 3-(dimethoxymethylsilyl)-1-propanethiol, 4-(6-mercaptohexaroyl)benzyl alcohol, 11-amino-1-undecenethiol, 11-mercaptoundecylphosphonic acid, 11-mercaptoundecyltrifluoroacetic acid, 2,2'-(ethylenedioxy)diethanethiol, 11-mercaptoundecytri(ethylene glycol), (1-mercaptoundec-11-yl)tetra(ethylene glycol), 1-(methylcarboxy)undec-11-yl)hexa(ethylene glycol), hydroxyundecyl disulfide, carboxyundecyl disulfide, hydroxyhexadodecyl disulfide, carboxyhexadecyl disulfide, tetrakis(2-ethylhexyloxy)titanium, titanium dioctyloxy bis(octylene glycolate), zirconium tributoxy monoacetylacetonate, zirconium monobutoxy acetylacetonate bis(ethylacetoacetate), zirconium tributoxy monostearate, acetoalkoxy aluminum diisopropylate, 3-glycidyloxypropyltrimethoxysilane, 2,3-butanedithiol, 1-butanethiol, 2-butanethiol, cyclohexanethiol, cyclopentanethiol, 1-decanethiol, 1-dodecanethiol, 2-ethylhexyl 3-mercaptopropionate, ethyl 3-mercaptopropionate, 1-heptanethiol, 1-hexadecanethiol, hexyl mercaptan, isoamyl mercaptan, isobutyl mercaptan, 3-mercaptopropionic acid, 3-methoxybutyl 3-mercaptopropionate, 2-methyl-1-butanethiol, 1-octadecanethiol, 1-octanethiol, 1-pentadecanethiol, 1-pentanethiol, 1-propanethiol, 1-tetradecanethiol, 1-undecanethiol, 1-(12-mercaptododecyl)imidazole, 1-(11-mercaptoundecyl)imidazole, 1-(10-mercaptodecyl)imidazole, 1-(16-mercaptohexadecyl)imidazole, 1-(17-mercaptoheptadecyl)imidazole, 1-(15-mercapto)dodecanoic acid, 1-(11-mercapto)undecanoic acid, 1-(10-mercapto)decanoic acid, and the like may also be used.

<Method for forming silane coupling agent layer>

As the method for forming a silane coupling agent layer, a method in which a silane coupling agent solution is applied to the inorganic substrate, a vapor deposition method, and the like can be used.

As the method for applying a silane coupling agent solution, it is possible to use a solution of a silane coupling agent diluted with a solvent such as an alcohol and to appropriately use conventionally known solution application means such as a spin coating method, a curtain coating method, a dip coating method, a slit die coating method, a gravure coating method, a bar coating method, a comma coating method, an applicator method, a screen printing method, and a spray coating method.

The silane coupling agent layer can also be formed by a vapor deposition method, and is specifically formed by exposing the inorganic substrate to the vapor of a silane coupling agent, namely, a silane coupling agent in a substantially gaseous state. The vapor of a silane coupling agent can be obtained by heating the silane coupling agent in a liquid state at a temperature of 40°C to about the boiling point of the silane coupling agent. The boiling point of silane coupling agents varies depending on the chemical structure, but is generally in a range of 100 to 250°C.

The environment for heating a silane coupling agent may be under any of raised pressure, normal pressure, or reduced pressure but is preferably under normal pressure or reduced pressure in the case of promoting the vaporization of the silane coupling agent. Since a large number of silane coupling agents are flammable liquids, it is preferable to perform the vaporization work in a closed container, preferably after purging the interior of the container with an inert gas. The time for exposing the inorganic substrate to a silane coupling agent is not particularly limited, but is preferably within 20 hours, more preferably within 60 minutes, still more preferably within 15 minutes, most preferably within 1 minute.

The temperature of the inorganic substrate during exposure of the inorganic substrate to a silane coupling agent is preferably controlled to an appropriate temperature between -50°C and 200°C depending on the kind of silane coupling agent and the desired thickness of the silane coupling agent layer.

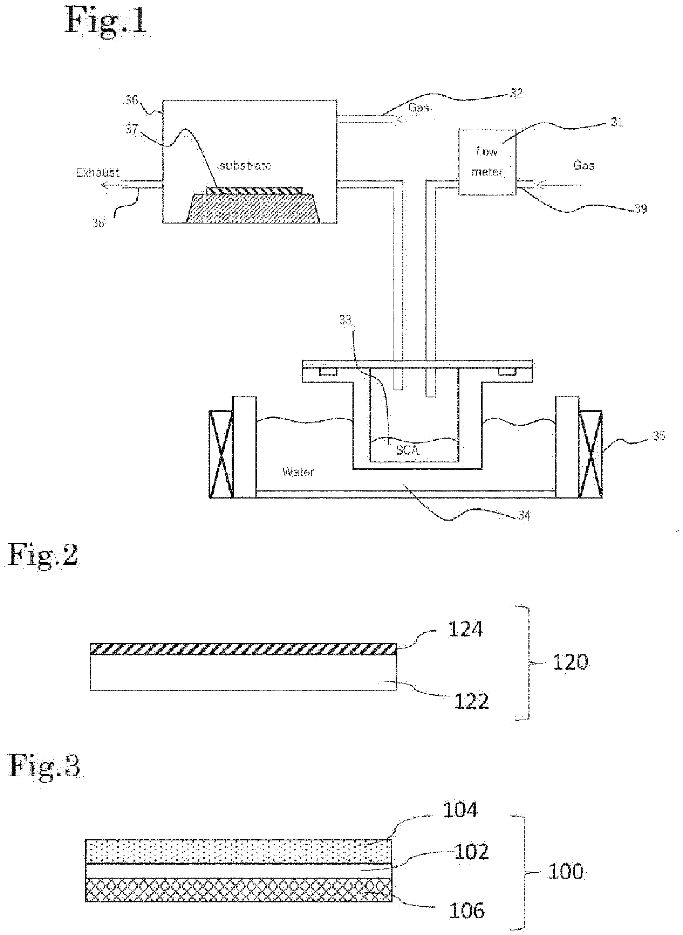

Fig. 1 is a diagram schematically illustrating an example of a silane coupling agent treatment apparatus used in a vapor deposition method.

As illustrated in Fig. 1, the silane coupling agent treatment apparatus includes a processing chamber (chamber) 36 connected to a gas inlet 32, an exhaust port 38, and a chemical tank (silane coupling agent tank) 33. A silane coupling agent is filled in the chemical tank (silane coupling agent tank) 33, and the temperature of the chemical tank 33 is controlled by a hot water tank (water bath) 34 equipped with a heater 35. A gas inlet 39 is connected to the chemical tank (silane coupling agent tank) 33 so that gas can be introduced into the chemical tank 33 from the outside. The flow rate of gas is adjusted by a flow meter 31 connected to the gas inlet 39. When gas is introduced through the gas inlet 39, the vaporized silane coupling agent in the chemical tank 33 is pushed into the processing chamber 36, and attached onto a substrate 37 (inorganic substrate, engineering plastic film, or the like) disposed in the processing chamber 36 as a silane coupling agent layer.

The film thickness of the silane coupling agent layer is extremely thinner compared to those of the inorganic substrate, polymer film and the like, is a thickness negligible from the viewpoint of mechanical design, and is only required to be minimum a thickness in the monomolecular layer order in principle. Generally, the film thickness is less than 400 nm, preferably 200 nm or less, and is preferably 100 nm or less, more preferably 50 nm or less, still more preferably 10 nm or less for practical use. However, when the film thickness is mathematically in a region of 5 nm or less, the silane coupling agent layer may exist in the form of a cluster rather than as a uniform coating film. The film thickness of the silane coupling agent layer can be calculated by the ellipsometry method or from the concentration of the silane coupling agent solution at the time of application and the applied amount.

In the laminate, the 90° initial peel strength between the polymer film and the inorganic substrate is preferably 0.05 N/cm or more, more preferably 0.08 N/cm or more, still more preferably 0.1 N/cm or more. The 90° initial peel strength is preferably 0.3 N/cm or less, more preferably 0.28 N/cm or less. When the 90° initial peel strength is 0.05 N/cm or more, it is possible to prevent the polymer film from peeling off from the inorganic substrate before and during device formation. When the 90° initial peel strength is 0.3 N/cm or less, it is easy to peel off the inorganic substrate and the polymer film from each other after device formation. In other words, when the 90° initial peel strength is 0.3 N/cm or less, the inorganic substrate and the polymer film are easily peeled off from each other even if the peel strength between the inorganic substrate and the polymer film slightly increases during device formation.

In the present specification, the 90° initial peel strength refers to the 90° peel strength between the inorganic substrate and the polymer film after the laminate has been subjected to heat treatment at 100°C for 10 minutes in an air atmosphere.

The measurement conditions for the 90° initial peel strength are as follows.

The polymer film is peeled off from the inorganic substrate at an angle of 90°.

The measurement is performed 5 times and the average value thereof is taken as the measured value.

Measured temperature; Room temperature (25°C)
Peeling speed; 100 mm/min
Atmosphere; Air
Width of measured sample; 2.5 cm

In more detail, the method is as described in Examples.

According to the laminate according to the present embodiment, since the first pressure sensitive adhesive layer contains a urethane-based resin, the pressure sensitive adhesive layer can be softened as well as can exhibit light peelability. In addition, since the maximum diameter of a gelled product in the first pressure sensitive adhesive layer is 14 μm or less, the transfer of the gelled product to the heat-resistant polymer film can be suppressed.

<Method for manufacturing laminate>

Hereinafter, the laminate manufacturing method according to the present embodiment will be described.

The laminate manufacturing method according to the present embodiment at least includes: a step A of preparing a first laminate including an inorganic substrate and a silane coupling agent layer; a step B of preparing a laminated film; a step C of irradiating the laminated film with an ultraviolet laser from a first protective film side to cut the first protective film and the heat-resistant polymer film into a predetermined shape; a step D of peeling off the second protective film from the heat-resistant polymer film after the step C, and a step E of bonding the silane coupling agent layer of the first laminate and the heat-resistant polymer film together after the step D to obtain a laminate in which the inorganic substrate, the silane coupling agent layer, the heat-resistant polymer film, and the first protective film are laminated in this order.

Hereinafter, the laminate manufacturing method according to the present embodiment will be described with reference to the drawings. Figs. 2 to 6 are diagrams for explaining the laminate manufacturing method according to the present embodiment.

<Step A>

In step A, a first laminate 120 including an inorganic substrate 122 and a silane coupling agent layer 124 is prepared (see Fig. 2). A method for preparing the first laminate is not particularly limited, but the first laminate can be obtained by forming a silane coupling agent layer on an inorganic substrate. The details of the method for forming a silane coupling agent layer on an inorganic substrate have already been described, and thus the description of the method is omitted here.

<Step B>

In step B, a laminated film 100 is prepared (see Fig. 3). The laminated film 100 includes a polymer film 102, a first protective film 104 laminated on one surface of the polymer film 102, and a second protective film 106 laminated on the other surface of the polymer film 102. The laminated film 100 can be obtained, for example, by the method described in the section of the laminated film manufacturing method.

<Step C>

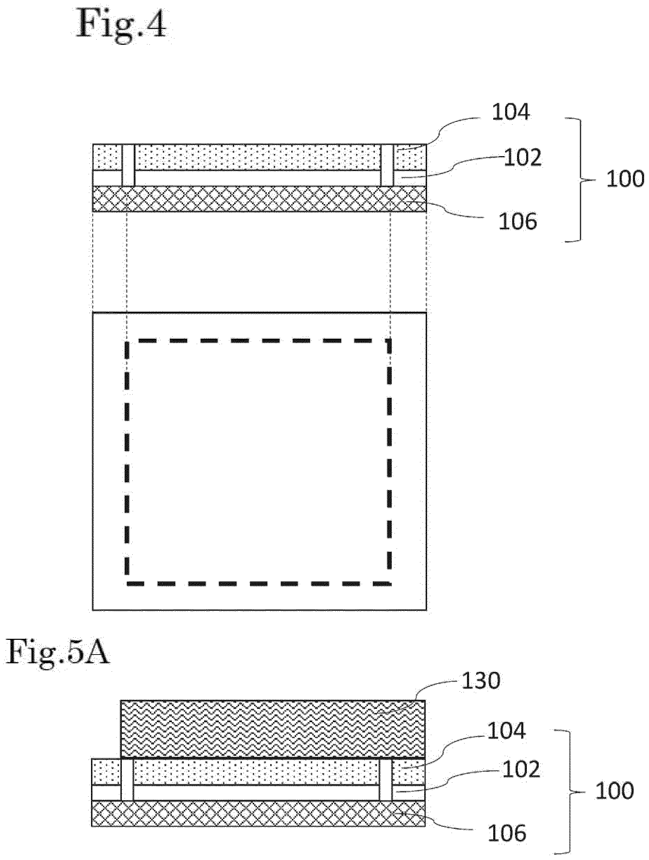

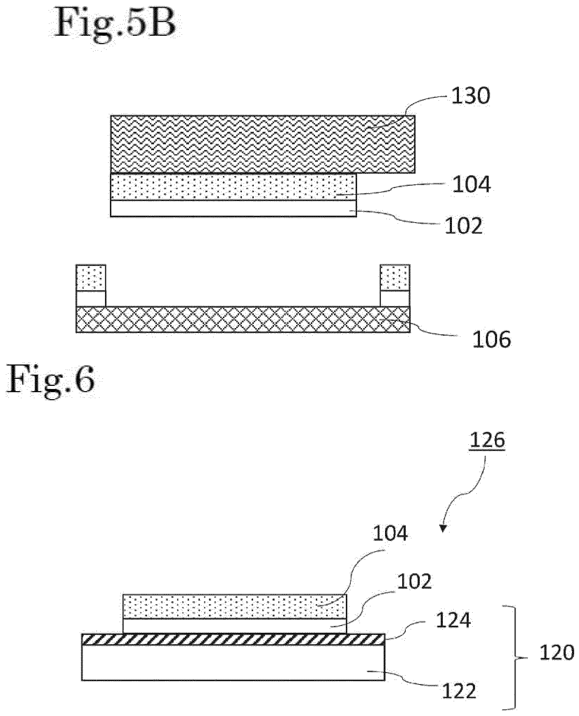

In step C, the laminated film 100 is irradiated with an ultraviolet laser from the first protective film 104 side to cut the first protective film 104 and the polymer film 102 into a predetermined shape. The irradiation with an ultraviolet laser is preferably performed in a state in which the second protective film 106 is not peeled off from the polymer film 102. As in the present embodiment, when irradiation with an ultraviolet laser is performed in a state in which the second protective film 106 is not peeled off from the polymer film 102, the peripheral portions of the first protective film 104 and polymer film 102 cut with an ultraviolet laser can be easily peeled off together with the second protective film 106 (see Figs. 4, 5A, and 5B). After irradiation with an ultraviolet laser, the surface (the other surface) of the polymer film 102 can be protected until immediately before being bonded to the inorganic substrate.

The ultraviolet laser has a wavelength preferably in a range of 310 nm to 450 nm, more preferably in a range of 340 nm to 380 nm. By setting the wavelength to 450 nm or less, it is possible to suitably cut the first protective film and the polymer film. By setting the wavelength to 310 nm or more, the ultraviolet absorber can suitably absorb the ultraviolet laser, and it is possible to suitably cut the first protective film and the polymer film. The shape (predetermined shape) to be cut with an ultraviolet laser is not particularly limited, and examples thereof include a rectangular shape and a circular shape. The shape can also be a shape including an orientation flat or a notch that conforms to the standards of the inorganic substrate. The predetermined shape can be appropriately set depending on the disposition and shape of the device to be formed on the polymer film.

The size of the predetermined shape is preferably smaller than that of the inorganic substrate since it is premised that the laminated film cut is bonded to the inorganic substrate. For example, on the premise that the laminated film cut does not protrude from the inorganic substrate, the size is preferably about 70 to 98% of the area of the inorganic substrate. However, there is also a method in which a plurality of polymer films is bonded to the inorganic substrate and used. In a case where two polymer films are bonded to the inorganic substrate and used, the size may be, for example, about 35 to 49% of the area of the inorganic substrate.

The cut trace by an ultraviolet laser has a tapered shape. In hand push machining with a knife such as the Thomson type, the cut portion is deformed and does not have a tapered shape. Therefore, when the cut traces at the peripheral portions of the first protective film 104 and the polymer film 102 have a tapered shape, it can be said that the films have been cut with an ultraviolet laser.

<Step D>

In step D, the second protective film 106 is peeled off from the polymer film 102. The method for peeling off the second protective film 106 from the polymer film 102 is not particularly limited, but examples thereof include a method in which a laminated product of the first protective film 104 and the polymer film 102 cut with an ultraviolet laser is lifted from the second protective film 106 by a vacuum pad 130 to peel off the second protective film 106 as illustrated in Figs. 5A and 5B.

<Step E>

In step E, the silane coupling agent layer 124 of the first laminate 120 and the polymer film 102 of the laminated product are bonded together to obtain a laminate in which the inorganic substrate 122, the silane coupling agent layer 124, the polymer film 102, and the first protective film 104 are laminated in this order. Specifically, bonding is performed by using the silane coupling agent layer 124 formed on the inorganic substrate 122 and the polymer film 102 as bonding surfaces and applying pressure and heat.

In the pressure and heat treatment, for example, pressing, lamination, roll lamination or the like may be carried out in an atmosphere at the atmospheric pressure or in a vacuum while heat is applied. A method in which pressure and heat are applied to the laminate in a state of being in a flexible bag can also be adopted. From the viewpoint of the improvement in productivity and the reduction of processing cost to be brought from high productivity, pressing or roll lamination in an atmosphere at the atmospheric pressure is preferable and a method using a roll (roll lamination or the like) is particularly preferable.

The pressure in the case of applying pressure and heat at the same time is preferably 1 MPa to 20 MPa, more preferably 3 MPa to 10 MPa. When the pressure is 20 MPa or less, it is possible to suppress damage to the inorganic substrate. When the pressure is 1 MPa or more, it is possible to prevent the generation of a portion that is not in close contact and insufficient adhesion. The temperature in the case of applying pressure and heat at the same time is preferably 80°C to 300°C, more preferably 100°C to 250°C. In a case where the polymer film is a polyimide film, the polyimide film may be damaged when the temperature is too high and the close contact force tends to be weak when the temperature is too low. Examples of the treatment in which heat and pressure are applied at the same time include hot roll lamination. In this case, a high temperature within the above range is preferable since the time during which heat and pressure are applied to the inorganic substrate and the film is short. The time for applying pressure and heat in the case of applying pressure and heat at the same time is preferably 1 to 60 seconds, more preferably 1 to 30 seconds.

The pressure treatment can also be carried out in an atmosphere at the atmospheric pressure as described above but is preferably carried out in a vacuum for acquiring stable peel strength over the entire surface. At this time, as the degree of vacuum, a degree of vacuum generated by an ordinary oil-sealed rotary pump is sufficient, and a degree of 10 Torr or less is sufficient.

As an apparatus that can be used for the pressure treatment, for example, "11FD" manufactured by Imoto Machinery Co., Ltd. or the like can be used for performing pressing in a vacuum. For example, "MVLP" manufactured by MEIKI CO., LTD. or the like can be used for performing vacuum lamination using a roll-type film laminator in a vacuum or a film laminator for evacuating the air and then applying pressure at once to the entire glass surface by a thin rubber film.

The pressure treatment can be performed by being separated into a pressurization process and a heating process. In this case, only the pressurization process may be performed but the heating process may not be performed. As the pressurization process in the case of separating the pressure treatment into a pressurization process and a heating process, it is preferable to secure close contact between the polymer film and the inorganic substrate by applying pressure (preferably about 0.2 to 50 MPa) to the polymer film and the inorganic substrate at a relatively low temperature (for example, a temperature of less than 120°C, more preferably 95°C or less). In the case of performing a heating process, as the heating process, it is preferable to perform heating at a relatively high temperature (for example, 100°C or more, more preferably 120 to 250°C, still more preferably 150 to 250°C) at a low pressure (preferably less than 0.2 MPa, more preferably 0.1 MPa or less) or normal pressure. The chemical reaction at the close contact interface is thus promoted and the polymer film and the inorganic substrate can be laminated. In the case of performing the pressure treatment and heat treatment separately, since the main purpose of the pressure treatment is to bring the inorganic substrate and the film into close contact with each other, the temperature may be lower than that in the case of applying pressure and heat at the same time. In that case, it is assumed that an apparatus capable of performing heating for a long time, such as a batch oven, is used for the heating process, and it is thus possible to perform the treatment at a lower temperature than that in the case of applying pressure and heat at the same time as for the heating temperature. In the case of performing the pressurization process and the heating process separately, the heating time is preferably 1 minute to 120 minutes, more preferably 5 minutes to 90 minutes.

It is thus possible to obtain the laminate 126 in which the inorganic substrate 122 and the polymer film 102 are bonded together.

However, the laminate manufacturing method according to the present invention is not limited to this example. As another example, for example, a silane coupling agent layer may be formed on a heat-resistant polymer film, and then an inorganic substrate may be bonded to the silane coupling agent layer.

According to the laminate manufacturing method according to the present embodiment, the laminated film is irradiated with an ultraviolet laser from the first protective film side to cut the first protective film and the heat-resistant polymer film into a predetermined shape (step C). The first protective film includes a first base material formed of a polyester film or a polyolefin film and a first pressure sensitive adhesive layer provided on the polyester film, and the first pressure sensitive adhesive layer contains an ultraviolet absorber, thus the first protective film and the heat-resistant polymer film are suitably cut with an ultraviolet laser, and peeling off of the first protective film and the heat-resistant polymer film from each other at the cut surface can be suppressed.

After the step C, the second protective film is peeled off from the heat-resistant polymer film (step D), and the silane coupling agent layer of the first laminate and the heat-resistant polymer film are bonded together to obtain a laminate in which the inorganic substrate, the silane coupling agent layer, the heat-resistant polymer film, and the first protective film are laminated in this order (step E). In the laminate thus obtained, the pressure sensitive adhesive layer can be softened as well as can exhibit light peelability. In addition, since the maximum diameter of a gelled product in the first pressure sensitive adhesive layer is 14 $\mu$m or less, the transfer of the gelled product to the heat-resistant polymer film can be suppressed.

The laminate manufacturing method according to the present embodiment has been described above.

<Method for fabricating flexible electronic device>

When the laminate is used, a flexible electronic device can be fabricated by forming an electronic device on the polymer film of the laminate using existing equipment and processes for electronic device fabrication and peeling off the electronic device from the laminate together with the polymer film.

In the present specification, the electronic device refers to a wiring board which carries out electrical wiring and has a single-sided, double-sided, or multilayered structure, electronic circuits including active devices such as transistors and diodes and passive devices such as resistors, capacitors, and inductors, sensor elements which sense pressure, temperature, light, humidity and the like, biosensor elements, light emitting elements, image display elements such as liquid crystal displays, electrophoresis displays, and self-luminous displays, wireless and wired communication elements, arithmetic elements, storage elements, MEMS elements, solar cells, thin film transistors, and the like.

In the method for fabricating a device structure in the present specification, the first protective film is peeled off from the laminate manufactured by the method described above, then a device is formed on the polymer film, and then the polymer film is peeled off from the inorganic substrate.

The method for peeling off the polymer film with device from the inorganic substrate is not particularly limited, but a method in which the polymer film with device is stripped off from the edge with tweezers and the like, a method in which a peeling portion to be the starting point is formed between the inorganic substrate and the polymer film, a pressure sensitive adhesive tape is pasted to this peeling portion, and then the polymer film is stripped off from the tape portion, a method in which one side of the notch portion of the polymer film is vacuum-adsorbed and then the polymer film is stripped off from that portion, and the like can be adopted. When the notch portion of the polymer film is bent with a small curvature during peeling off, stress may be applied to the device at that portion and the device may be destroyed, and it is thus desirable to peel off the polymer film in the state of having a curvature as large as possible. For example, it is desirable to strip off the polymer film while winding the polymer film on a roll having a large curvature or to strip off the polymer film using a machine having a configuration in which the roll having a large curvature is located at the peeling portion.

As the method for making a notch into the polymer film, there are a method in which the polymer film is cut with a cutting tool such as a cutter, a method in which the polymer film is cut by scanning a laser and the laminate relative to each other, a method in which the polymer film is cut by scanning a water jet and the laminate relative to each other, a method in which the polymer film is cut while being notched a little to the glass layer by a dicing apparatus for a semiconductor chip, and the like, but the method is not particularly limited. For example, when the above-described methods are adopted, it is also possible to appropriately adopt a technique in which ultrasonic waves are superimposed on the cutting tool or a reciprocating motion, a vertical motion and the like are further added to improve the cutting performance.

It is also useful to stick another reinforcing base material to the portion to be peeled off in advance and peel off the polymer film together with the reinforcing base material. In a case where the flexible electronic device to be peeled off is the backplane of a display device, it is also possible to obtain a flexible display device by pasting the front plane of the display device in advance, integrating these on an inorganic substrate, and then peeling off these two at the same time.

EXAMPLES

Hereinafter, the present invention will be described in detail with reference to Examples, but the present invention is not limited to the following Examples as long as the gist of the present invention is not exceeded.

Commercially available films were used as heat-resistant polymer films F1 and F2.

F1: UPILEX (registered trademark) 25S (polyimide film manufactured by UBE Corporation, thickness: 25 μm)
F2: XENOMAX (registered trademark) F15LR2 (polyimide film manufactured by TOYOBO CO., LTD., thickness: 15 μm)

fabrication of heat-resistant polymer film F3: Synthesis of polyamic acid solution>

The inside of a reaction vessel equipped with a nitrogen introducing tube, a reflux tube, and a stirring bar was purged with nitrogen, and then 22.0 parts by mass of 2,2'-bis(trifluoromethyl)benzidine (TFMB), 252.1 parts by mass of N,N-dimethylacetamide (DMAc), and a dispersion ("SNOWTEX (registered trademark) DMAC-ST-ZL" manufactured by Nissan Chemical Corporation) obtained by dispersing colloidal silica as a lubricant in dimethylacetamide were dissolved. At this time, the dispersion obtained by dispersing colloidal silica in dimethylacetamide ("SNOWTEX (registered trademark) DMAC-ST-ZL" manufactured by Nissan Chemical Corporation) was added so that silica (lubricant) was 0.4% by mass of the total amount of polymer solids in the polyamic acid solution. Subsequently, 22.0 parts by mass of 3,3',4,4'-biphenyltetracarboxylic dianhydride (BPDA) was added dividedly in the solid form, and the mixture was then stirred at room temperature for 24 hours. Thereafter, 165.7 parts by mass of DMAc was added for dilution, thereby obtaining a polyamic acid solution 1 having a solid content (NV) of 11% by mass and a reduced viscosity of 3.5 dl/g.

<Fabrication of heat-resistant polymer film F3>

The polyamic acid solution 1 was adjusted and applied onto the lubricant-free surface of polyethylene terephthalate film A4100 (support manufactured by TOYOBO CO., LTD.) using a comma coater so that the final film thickness was 25 μm. The polyethylene terephthalate film A04100 was allowed to pass through a hot air furnace, wound up, and dried at 100°C for 10 minutes at this time. The polyamic acid film that gained self-supporting properties after drying was peeled off from the support, allowed to pass through a pin tenter with a pin sheet having pins disposed, and gripped by inserting the film edges into the pins, the pin sheet interval was adjusted so that the film did not break and unnecessary slackening did not occur, and the film was transported and heated at 200°C for 3 minutes, at 250°C for 3 minutes, and at 300°C for 6 minutes to conduct the imidization reaction. Thereafter, the film was cooled to room temperature for 2 minutes, the portions exhibiting poor flatness at both edges of the film were cut off using a slitter, and the film was wound into a roll shape, thereby obtaining a heat-resistant polymer film F3 having a width of 450 mm by 500 m.

<Tensile modulus of elasticity, tensile breaking strength, and tensile breaking elongation of heat-resistant polymer film>

The heat-resistant polymer films F1 to F3 were cut into a strip shape of 100 mm × 10 mm in the machine direction (MD direction) and the transverse direction (TD direction) respectively to be used as test pieces. The test piece was cut from the center portion in the transverse direction. The tensile modulus of elasticity, tensile breaking strength, and tensile breaking elongation in each of the MD direction and the TD direction were measured at a temperature of 25°C, a tensile speed of 50 mm/min, and a distance between chucks of 40 mm using a tensile tester (Autograph (R), Model name: AG-5000A manufactured by Shimadzu Corporation). The results are presented in Table 1.

<Coefficient of linear thermal expansion (CTE) of polyimide film>

The expansion/contraction rate of the heat-resistant polymer films F1 to F3 in the machine direction (MD direction) and the transverse direction (TD direction) was measured under the following conditions, the expansion/contraction rate/temperature was measured at intervals of 2°C, such as 30°C to 32°C and 32°C to 34°C, this measurement was performed up to 300°C, and the average value of all measured values was calculated as CTE. The results are presented in Table 1.

Device name; TMA4000S produced by MAC Science Corporation
Length of sample; 20 mm
Width of sample; 2 mm
Start temperature in temperature increase; 25°C
End temperature in temperature increase; 400°C
Rate of temperature increase; 5°C/min
Atmosphere; Argon

[Table 1]

| Heat-resistant polymer film | F1 | F2 | F3 |
|---|---|---|---|
| **Thickness ($\mu$m)** | 25 | 15 | 25 |
| Tensile modulus of elasticity of heat-resistant polymer film (Gpa) | 9.1 | 8.5 | 6.5 |
| Tensile breaking strength of heat-resistant polymer film (Mpa) | 518 | 504 | 320 |
| Tensile breaking elongation of heat-resistant polymer film (%) | 40 | 39 | 4.1 |
| CTE of heat-resistant polymer film (ppm/K) | 12 | 2 | 19 |

<Fabrication of protective film>

The following base materials were prepared.

Base material 1: A4100 (polyethylene terephthalate (hereinafter also referred to as PET film) film) manufactured by TOYOBO CO., LTD.
Base material 2: E4100 (PET film) manufactured by TOYOBO CO., LTD.
Base material 3: One prepared by adding an ultraviolet absorber (Cyasorb UV-3638 (manufactured by CYTEC)) to the base material 1 by dyeing treatment (procured from TOCHISEN)
Base material 4: One prepared by performing corona treatment on one surface of TORAYFAN (manufactured by TORAY INDUSTRIES, INC.) with a **thickness of 26 $\mu$m (polypropylene** film)

<Measurement of UV transmittance of base material>

UV transmittance measurement was performed on the base materials 1 to 4. Specifically, UV transmittance measurement was performed by a transmission method using UV-3150 manufactured by Shimadzu Corporation. At that time, the transmittance (%) at a wavelength of 355 nm was 73% for the base material 1, 71% for the base material 2, 74% for the base material 3, and 85% for the base material 4.

[Protective film]

A protective film was prepared as follows.

[Preparation of pressure sensitive adhesive composition A1]

Into a separable flask, 55.3 parts by mass of polyol (trifunctional polyol obtained by addition polymerization of propylene oxide and ethylene oxide to glycerin, SANNIX (registered trademark) GL3000 manufactured by Sanyo Chemical Industries, Ltd.), 4.7 parts by mass of DURANATE D101 (polyisocyanate manufactured by Asahi Kasei Corporation), 39.7 parts by mass of toluene, and 0.02 parts by mass of dibutyltin dilaurate (DBTDL) were put, and heated at 45°C to 55°C for 2 hours while being stirred for reaction. After 2 hours from the start of heating, the mixture was cooled to 40°C or less. After cooling, 0.28 parts by mass of an antioxidant was added, and the mixture was stirred until to be uniform, thereby obtaining a polyurethane polyol-containing composition 1. With 100 parts by mass of polyurethane polyol-containing composition 1, 7.7 parts by mass of DURANATE D101, 2 parts by mass of an ultraviolet absorber (Cyasorb UV-3638 (manufactured by CYTEC)), and 50 parts by mass of ethyl acetate were blended, and the mixture was thoroughly stirred. The obtained pressure sensitive adhesive composition was filtered through a PTFE cartridge filter (0.45 $\mu$m), thereby obtaining a pressure sensitive adhesive composition A1.

[Preparation of pressure sensitive adhesive composition A2]

A pressure sensitive adhesive composition A2 was obtained in the same manner as the pressure sensitive adhesive composition A1 except that an ultraviolet absorber was not added.

[Preparation of pressure sensitive adhesive composition A3]

A pressure sensitive adhesive composition A3 was obtained in the same manner as the pressure sensitive

EP 4 302 994 A1

adhesive composition A1 except that filtering was not performed.

[Fabrication of protective film]

Immediately after preparation, the pressure sensitive adhesive compositions A1 to A3 were applied to the base materials 1 to 4 respectively so that the pressure sensitive adhesive film thickness when dried was 10 to 15 μm. After that, the base materials were dried by heating at 130°C for 2 minutes and then allowed to still stand in a thermostatic chamber at 40°C for 3 days (aging process), and the pressure sensitive adhesive was cured (crosslinked), thereby fabricating protective films PF1 to PF8.

Commercially available products were used as protective films PF10 and F11.

PF10: FIX-FILM (HG2) manufactured by FUJICOPIAN CO., LTD., polyester base material, silicone-based pressure sensitive adhesive

PF11: SAT manufactured by Sun A Kaken Co., Ltd., polyester base material, acrylic-based pressure sensitive adhesive

The combinations of base materials and pressure sensitive adhesive layers (pressure sensitive adhesive compositions) are presented in Table 2.

<Measurement of UV transmittance of protective film>

UV transmittance measurement was performed on the fabricated protective films PF1 to PF11. The UV transmittance measurement was performed in the same manner as the "measurement of UV transmittance of base material". The results are presented in Table 2.

<Measurement of maximum diameter of gelled product in pressure sensitive adhesive layer>

The protective films PF1 to PF11 were stored in an environment of 23°C and 50% RH for 5 months. After that, the protective films were cut into a size of 10 cm × 10 cm, and the pressure sensitive adhesive layer at the four corners, between the corners, and two places near the center (10 places in total) of the protective film was observed at a magnification of 50x under a laser microscope (OPTELICS HYBRID manufactured by Lasertec Corporation) (the range visible under the microscope was counted as one place) to measure the maximum diameter of gelled products. The results are presented in Table 2. Here, the long side of the Feret diameter (the length of a straight line binding the two furthest points of the gelled product) was taken as the maximum diameter.

Whether it was a gelled product was judged from the shape. Specifically, those that were similar in shape to the foreign substances transferred to the heat-resistant polymer film, the foreign substances being observed in "counting of number of foreign substances transferred from first pressure sensitive adhesive layer of first protective film to heat-resistant polymer film" described later, were judged to be gelled products. Those that were clearly considered to be disturbances such as fibrous substances were judged not to be gelled products.

[Table 2]

| Protective film | PF1 | PF2 | PF3 | PF4 | PF6 | PF7 | PF8 | PF10 | PF11 |
|---|---|---|---|---|---|---|---|---|---|
| Base material | 1 | 1 | 1 | 2 | 3 | 4 | 4 | Polyester | Polyester |
| Pressure sensitive adhesive composition | A1 | A2 | A3 | A1 | A2 | A1 | A3 | Silicone-based | Acrylic-based |
| UV transmittance of protective film (%) | 0.5 | 63 | 0.3 | 0.5 | 63 | 0.5 | 66 | - | 72 |
| Maximum diameter of gelled product in pressure sensitive adhesive layer (μm) | 9 | 10.2 | 21 | 9.3 | 11 | 9 | 24 | - | 12 |

25

<Fabrication of laminated film>

[Fabrication of laminated film 1 (step B)]

PF1 as the first protective film and PF10 as the second protective film were bonded to both surfaces of the heat-resistant polymer film F2 respectively to obtain a laminated film 1 in Example 1. The bonding was specifically carried out by lamination in a clean environment. Lamination was performed between a metal roll and a rubber roll, and the temperature during lamination was normal temperature of 22°C and 52% RH, and the films were successively bonded one by one. The unwinding tension at this time was 120 N for the polyimide film and 160 N for the protective film. Almost the same tension was applied to the winding side as well.

[Fabrication of laminated films 2 to 12]

Laminated films 2 to 12 were obtained in the same manner as in the fabrication of laminated film 1 except that the combination of a protective film used as the first protective film, a protective film used as the second protective film, and a heat-resistant polymer film was changed to the combinations presented in Table 3. The bonding method and conditions were the same as in Example 1.
<Measurement of 90° peel strength between heat-resistant polymer film and first protective film>
The 90° peel strength between the heat-resistant polymer film and the first protective film was measured for the laminated films obtained in the fabrication of laminated films. The results are presented in Table 3.
The measurement conditions for 90° peel strength are as follows.
The heat-resistant polymer film is peeled off from the first protective film at an angle of 90°.
The measurement is performed 5 times and the average value thereof is taken as the measured value.
Measuring instrument; Autograph AG-IS manufactured by Shimadzu Corporation

Measured temperature; Room temperature (25°C)
Peeling speed; 100 mm/min
Atmosphere; Air
Width of measured sample; 5 cm

[Table 3]

| Laminated film No. | | 1 | 2 | 3 | 4 | 5 | 6 | 7 | 8 | 9 | 10 | 11 | 12 |
|---|---|---|---|---|---|---|---|---|---|---|---|---|---|
| Laminated film | First protective film | PF1 | PF2 | PF3 | PF4 | PF5 | PF6 | PF7 | PF8 | PF1 | PF1 | PF4 | PF11 |
| | Heat-resistant polymer film | F2 | F2 | F2 | F2 | F2 | F2 | F2 | F2 | F1 | F3 | F3 | F2 |
| | Second protective film | PF10 | PF10 | PF10 | PF2 | PF2 | PF10 | PF10 | PF10 | PF10 | PF10 | PF2 | PF10 |
| 90° peel strength between heat-resistant polymer film and first protective film (N/cm) | | 0.01 | 0.012 | 0.12 | 0.018 | 0.02 | 0.02 | 0.05 | 0.07 | 0.04 | 0.07 | 0.09 | 0.23 |

<Measurement of Martens hardness of first pressure sensitive adhesive layer>

The hardness of the first pressure sensitive adhesive layer of the first protective film was measured using a dynamic ultra micro hardness tester (DUH-211S manufactured by Shimadzu Corporation). The base material side of the protective film was fixed to the slide glass using Aron Alpha, and the measurement was performed at a 50x objective lens, a loading rate of 0.2926 mN/s, and a pushing depth of 1 $\mu$m. Triangular115 was used as the indenter. The measurement results are presented in Table 4.

<Counting of number of foreign substances transferred from first pressure sensitive adhesive layer of first protective film to heat-resistant polymer film>

The laminated films 1 to 12 were stored in an environment of 23°C and 50% RH for 3 months. The first protective film was peeled off from the heat-resistant polymer film at 90°, and observation was performed on 30 places (the range visible under the microscope was counted as one place) at a magnification of 600x under Digital Microscope VH-Z100R manufactured by KEYENCE CORPORATION to count the number of attached foreign substances. The range of one visual field when observed at a magnification of 600x under Digital Microscope VH-Z100R is $1.75 \times 10^5$ $\mu$m$^2$. The results are presented in Table 3.
The conditions for 90° peeling are as follows.
The heat-resistant polymer film is peeled off from the first protective film at an angle of 90°.

Temperature; Room temperature (25°C)
Peeling speed; 100 mm/min
Atmosphere; Air

<Fabrication of laminate>

(Example 1)

First, a glass substrate was prepared. The glass substrate is 0.7 mm thick OA10G glass (manufactured by NEG Co., Ltd.) cut into a size of 100 mm × 100 mm. The glass substrate was washed with pure water, dried, then irradiated using a UV/O$_3$ irradiator (SKR1102N-03 manufactured by LANTECHNICAL SERVICE CO., LTD.) for 1 minute for cleaning, and used. Next, a silane coupling agent (SCA) was applied onto the glass substrate by a vapor phase coating method to form a silane coupling agent layer, thereby obtaining a first laminate (step A). Specifically, the application of a silane coupling agent to the glass substrate was performed using the silane coupling agent treatment apparatus illustrated in Fig. 1. Into a chemical tank having a capacity of 1 L, 130 g of 3-aminopropyltrimethoxysilane (KBM-903 manufactured by Shin-Etsu Chemical Co., Ltd.) was put, and the outer water bath of this chemical tank was warmed to 42°C. The vapor that came out was then sent to the chamber together with clean dry air. The gas flow rate was set to 22 L/min and the substrate temperature was set to 21°C. The temperature of clean dry air was 23°C and the humidity thereof was 1.2% RH. Since the exhaust is connected to the exhaust port having a negative pressure, it is confirmed that the chamber has a negative pressure of about 2 Pa by a differential pressure gauge.
Meanwhile, the laminated film 1 fabricated above was irradiated with an ultraviolet laser from the first protective film side so as to have a size of 70 mm × 70 mm. The irradiation with an ultraviolet laser was performed in a state in which the first protective film and the second protective film were not peeled off from the heat-resistant polymer film. The ultraviolet laser used was a pulsed laser with a wavelength of 355 nm manufactured by Takei Electric Industries Co., Ltd. The same place was scanned three times at an electric power of 8.5 W, a pulse frequency of 1000 kHz, and a scanning speed of 500 mm/sec. The first protective film and the heat-resistant polymer film were thus cut into a size of 70 mm × 70 mm (step C).
Here, the smear width after irradiation with an ultraviolet laser was measured. Specifically, the laser-irradiated surface (first protective film surface) of the laminated film 1 was observed under an optical microscope. Since a black powdery substance was observed, the distance in the orthogonal direction from the laser-cut portion of the black powdery portion was determined, and the maximum value thereof was taken as the smear width. The results are presented in Table 4.
The peeling width between the first protective film and the heat-resistant polymer film was measured. Specifically, the laser-irradiated surface (first protective film surface) of the laminated film 1 was observed under an optical microscope. Since peeling was observed between the first protective film and the heat-resistant polymer film, the distance in the orthogonal direction from the laser-cut portion of the peeling portion was determined, and the maximum value of this width was taken as the peeling width between the first protective film and the heat-resistant polymer film. The results are presented in Table 4.

Since at least the first protective film and heat-resistant polymer film of the laminated film 1 were cut into a size of 70 mm × 70 mm by the irradiation with an ultraviolet laser, the second protective film was peeled off from the heat-resistant polymer film (step D).

Next, the silane coupling agent layer of the first laminate and the heat-resistant polymer film were bonded together, thereby obtaining a laminate in which a glass substrate, a silane coupling agent layer, a heat-resistant polymer film, and a first protective film were laminated in this order (step E). A laminator (MRK-1000 manufactured by MCK CO., LTD.) was used for bonding, and the bonding conditions were set to air source pressure: 0.7 MPa, temperature: 22°C, humidity: 55% RH, and lamination speed: 50 mm/sec.

(Example 2)

A laminate was obtained in the same manner as in Example 1 except that the laminated film 4 was used instead of the laminated film 1.

(Example 3)

A laminate was obtained in the same manner as in Example 1 except that the laminated film 7 was used instead of the laminated film 1.

(Example 4)

A laminate was obtained in the same manner as in Example 1 except that the laminated film 9 was used instead of the laminated film 1.

(Example 5)

A laminate was obtained in the same manner as in Example 1 except that the laminated film 10 was used instead of the laminated film 1.

(Example 6)

A laminate was obtained in the same manner as in Example 1 except that the laminated film 11 was used instead of the laminated film 1.

(Example 7)

A laminate was obtained in the same manner as in Example 1 except that the laminated film 2 was used instead of the laminated film 1.

(Comparative Example 1)

A laminate was obtained in the same manner as in Example 1 except that the laminated film 3 was used instead of the laminated film 1.

(Comparative Example 2)

A laminate was obtained in the same manner as in Example 1 except that the laminated film 12 was used instead of the laminated film 1.

(Comparative Example 3)

A laminate was obtained in the same manner as in Example 1 except that the laminated film 8 was used instead of the laminated film 1.

(Comparative Example 4)

A laminate was obtained in the same manner as in Example 1 except that the laminated film 6 was used instead of the laminated film 1.

The thicknesses of the silane coupling agent layers included in the laminates obtained in Examples and Comparative Examples were all in the range of 4 nm to 8 nm.

<Peeling width between inorganic substrate and heat-resistant polymer film>

The peeling width between the inorganic substrate and the heat-resistant polymer film of the fabricated laminate was measured. Specifically, the fabricated laminate was observed from the inorganic substrate side under an optical microscope. Since peeling between the inorganic substrate and the heat-resistant polymer film was observed, the width of the peeling portion (the width in the orthogonal direction from the laser-cut portion) was determined, and the maximum value of this width was taken as the peeling width between the first protective film and the heat-resistant polymer film. The results are presented in Table 4.

<Measurement of 90° initial peel strength>

The protective film was peeled off from the laminate obtained in the fabrication of laminate. After that, heat treatment was performed at 200°C for 1 hour in an air atmosphere. Thereafter, the 90° initial peel strength between the inorganic substrate (glass substrate or silicon wafer) and the polyimide film was measured. The results are presented in Table 4. In Comparative Example 2, the 90° initial peel strength was not measured since the inorganic substrate and the heat-resistant polymer film peeled off from each other during peeling off of the protective film.

The measurement conditions for 90° initial peel strength are as follows.

The film is peeled off from the inorganic substrate at an angle of 90°.

The measurement is performed 5 times and the average value thereof is taken as the measured value.

Measuring instrument; Autograph AG-IS manufactured by Shimadzu Corporation

Measured temperature; Room temperature (25°C)
Peeling speed; 100 mm/min
Atmosphere; Air
Width of measured sample; 2.5 cm

[Table 4]

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Laminated film No. | | 1 | 4 | 7 | 9 | 10 | 11 | 2 | 3 | 12 | 8 | 6 |
| Evaluation of laminated film | Martens hardness of first pressure sensitive adhesive layer (N/mm2) | 25.6 | 25.6 | 23.2 | 25.4 | 25.5 | 25.6 | 25.7 | 25.3 | 35.1 | 25.5 | 25.3 |
| | Number of foreign substances transferred from first pressure sensitive adhesive layer to polymer film (pieces/cm2) | 2410 | 2350 | 2200 | 2870 | 2670 | 2650 | 2660 | 7400 | 12500 | 7320 | 7470 |

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Laminated film No. | | 1 | 4 | 7 | 9 | 10 | 11 | 2 | 3 | 12 | 8 | 6 |
| Evaluation of laminate | **Smear width** ($\mu$m) | 0 | 0 | 0 | 0 | 0 | 0 | 340 | 0 | 290 | 320 | 890 |
| | feeling width between first protective film and polymer film ($\mu$m) | 0 | 0 | 0 | 0 | 0 | 0 | 280 | 0 | 0 | 210 | 420 |
| | Peeling width between inorganic **substrate and polymer film** ($\mu$s) | 20 | 23 | 24 | 33 | 26 | 23 | 520 | 22 | 230 | 521 | 89 |
| | 90' initial peel strength (H/cm) | 0.12 | 0.12 | 0.12 | 0.09 | 0.1 | 0.1 | 0.12 | 0.12 | - | 0.12 | 0.12 |

EP 4 302 994 A1

32

(Result 1)

In the laminated films of Examples including a first pressure sensitive adhesive layer obtained by applying a pressure sensitive adhesive composition obtained by filtering a pressure sensitive adhesive composition containing a urethane-based resin through a filter, the Martens hardness of the first pressure sensitive adhesive layer is low and the 90° peel strength between the heat-resistant polymer film and the first protective film is low. In other words, the first pressure sensitive adhesive layer is soft as well as exhibits light peelability. In the laminated films of Examples, the maximum diameter of gelled products in the first pressure sensitive adhesive layer is 14 $\mu$m or less, and the number of attached foreign substances is also small. In other words, the transfer of gelled products to the polymer film is suppressed.

(Result 2)

In the laminated films 1, 4, 7, 9, 10, and 11 in which a protective film containing an ultraviolet absorber in a pressure sensitive adhesive layer (first pressure sensitive adhesive layer) is used as the first protective film, the first protective film and the polyimide film can be suitably cut with an ultraviolet laser. In other words, the smear width at the cut portion is narrow and the shape of the cross section is also regular. It has been confirmed that the peeling width between the first protective film and the polyimide film at the cut surface is narrow and peeling can be suppressed.

DESCRIPTION OF REFERENCE SIGNS

| | |
|---|---|
| 100 | Laminated film |
| 102 | Polymer film |
| 104 | First protective film |
| 106 | Second protective film |
| 120 | First laminate |
| 122 | Inorganic substrate |
| 124 | Silane coupling agent layer |
| 126 | Laminate |
| 130 | Vacuum pad |

**Claims**

1. A laminated film comprising:

   a heat-resistant polymer film; and
   a first protective film laminated on one surface of the heat-resistant polymer film,
   wherein
   the first protective film includes a first base material and a first pressure sensitive adhesive layer provided on the first base material,
   the first base material, the first pressure sensitive adhesive layer, and the heat-resistant polymer film are laminated in this order,
   the first base material is a polyester film or a polyolefin film,
   the first pressure sensitive adhesive layer contains a urethane-based resin, and
   a maximum diameter of a gelled product in the first pressure sensitive adhesive layer is 14 um or less.

2. The laminated film according to claim 1, wherein

   the first pressure sensitive adhesive layer contains an ultraviolet absorber, and
   the laminated film is used after being cut with an ultraviolet laser.

3. The laminated film according to claim 1 or 2, wherein a 90° peel strength between the heat-resistant polymer film and the first protective film is 0.002 N/cm or more and 0.2 N/cm or less.

4. The laminated film according to any one of claims 1 to 3, wherein a number of foreign substances transferred from the first pressure sensitive adhesive layer to the heat-resistant polymer film is 7000 pieces/cm$^2$ or less.

5. The laminated film according to any one of claims 1 to 4, wherein a Martens hardness of the first pressure sensitive adhesive layer is 40 N/mm$^2$ or less.

6. The laminated film according to any one of claims 1 to 5, wherein the first base material is a polyethylene terephthalate film.

7. The laminated film according to any one of claims 1 to 6, wherein the heat-resistant polymer film is a polyimide film.

8. The laminated film according to any one of claims 1 to 7, comprising a second protective film laminated on the other surface of the heat-resistant polymer film.

9. A laminated film manufacturing method, wherein

the laminated film includes a heat-resistant polymer film and a first protective film laminated on one surface of the heat-resistant polymer film,
the first protective film includes a first base material and a first pressure sensitive adhesive layer provided on the first base material,
the first base material, the first pressure sensitive adhesive layer, and the heat-resistant polymer film are laminated in this order, and
the first base material is a polyester film or a polyolefin film,
the laminated film manufacturing method comprising:

a step X of filtering a pressure sensitive adhesive composition containing a urethane-based resin through a filter having a filter diameter of 0.2 um or more and 10 um or less; and
a step Y of applying the filtered pressure sensitive adhesive composition to form a first pressure sensitive adhesive layer.

10. A laminate comprising an inorganic substrate, a silane coupling agent layer, a heat-resistant polymer film, and a first protective film laminated in this order,
wherein

the first protective film includes a first base material and a first pressure sensitive adhesive layer provided on the first base material,
the first base material, the first pressure sensitive adhesive layer, and the heat-resistant polymer film are laminated in this order,
the first base material is a polyester film or a polyolefin film,
the first pressure sensitive adhesive layer contains a urethane-based resin, and
a maximum diameter of a gelled product in the first pressure sensitive adhesive layer is 14 um or less.

11. A laminate manufacturing method, comprising:

a step A of preparing a first laminate including an inorganic substrate and a silane coupling agent layer;
a step B of preparing the laminated film according to any one of claims 1 to 8;
a step C of irradiating the laminated film with an ultraviolet laser from a first protective film side to cut the first protective film and the heat-resistant polymer film into a predetermined shape;
a step D of peeling off the second protective film from the heat-resistant polymer film after the step C; and
a step E of bonding the silane coupling agent layer of the first laminate and the heat-resistant polymer film together after the step D to obtain a laminate in which the inorganic substrate, the silane coupling agent layer, the heat-resistant polymer film, and the first protective film are laminated in this order.

# Fig.1

# Fig.2

# Fig.3

Fig.4

104
102 } 100
106

Fig.5A

130
104
102 } 100
106

Fig.5B

130

104

102

106

Fig.6

126

104

102

124

120

122

## INTERNATIONAL SEARCH REPORT

International application No.

**PCT/JP2021/039796**

### A. CLASSIFICATION OF SUBJECT MATTER

***B32B 27/00***(2006.01)i; ***B32B 27/32***(2006.01)i; ***B32B 27/36***(2006.01)i; ***B32B 27/40***(2006.01)i; ***C09K 3/00***(2006.01)i
FI: B32B27/00 M; B32B27/32; B32B27/36; B32B27/40; C09K3/00 104

According to International Patent Classification (IPC) or to both national classification and IPC

### B. FIELDS SEARCHED

Minimum documentation searched (classification system followed by classification symbols)

B32B27/00; B32B27/32; B32B27/36; B32B27/40; C09K3/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-100026 A (TOYOBO CO., LTD.) 02 July 2020 (2020-07-02)<br>entire text | 1-11 |
| A | WO 2016/031746 A1 (TOYOBO CO., LTD.) 03 March 2016 (2016-03-03)<br>entire text | 1-11 |
| A | JP 2008-207356 A (TEIJIN DUPONT FILMS JAPAN LTD) 11 September 2008 (2008-09-11)<br>entire text | 1-11 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 November 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/JP2021/039796**

| Patent document cited in search report | | | Publication date (day/month/year) | Patent family member(s) | | | Publication date (day/month/year) |
|---|---|---|---|---|---|---|---|
| JP | 2020-100026 | A | 02 July 2020 | (Family: none) | | | |
| WO | 2016/031746 | A1 | 03 March 2016 | US entire text | 2017/0225433 | A1 | |
| JP | 2008-207356 | A | 11 September 2008 | KR 10-2008-0078567 entire text | | A | |

## REFERENCES CITED IN THE DESCRIPTION

**Patent documents cited in the description**

- WO 2016031746 A
- WO 2018207938 A
- JP 2001102636 A